# EUROPÄISCHE PATENTSCHRIFT

(11) **EP 4 169 637 B1**
(45) Veröffentlichungstag und Bekanntmachung des Hinweises auf die Patenterteilung: **04.06.2025**
(21) Anmeldenummer: 22200048.1
(22) Anmeldetag: 06.10.2022
(51) Int. Cl.: B21F 35/00, B21F 3/02, B21F 23/00, B65G 51/02, B24B 7/16, B24B 41/00

(54) **VERFAHREN UND SYSTEM ZUR HERSTELLUNG VON SCHRAUBENFEDERN**
METHOD AND SYSTEM FOR MANUFACTURING COIL SPRINGS
PROCÉDÉ ET SYSTÈME DE FABRICATION DE RESSORTS HÉLICOÏDAUX

(30) Priorität: 13.10.2021 DE 102021211526
(43) Veröffentlichungstag der Anmeldung: 26.04.2023
(73) Patentinhaber: WAFIOS Aktiengesellschaft, 72764 Reutlingen (DE)
(72) Erfinder: WALZ, Bernd, 72793 Pfullingen (DE); WEIBLEN, Frank, 72555 Metzingen (DE); FRIES, Stefan, 72764 Reutlingen (DE); SOSNOWSKI, Michael, 72762 Reutlingen (DE); MEYER, Felix, 72770 Reutlingen (DE)
(74) Vertreter: Patentanwälte Ruff, Wilhelm, Beier, Dauster & Partner mbB

(56) Entgegenhaltungen:
- EP-A1- 2 826 734
- EP-A1- 2 926 946
- DE-A1- 2 006 611
- DE-A1- 2 417 685
- DE-A1- 2 426 327
- DE-A1- 3 336 709
- JP-A- 2002 079 339
- JP-A- S 591 142

## Beschreibung

Die Erfindung bezieht sich auf ein Verfahren und ein System zur Herstellung von Schraubenfedern.

Schraubenfedern sind Maschinenelemente, die in zahlreichen Anwendungsbereichen in großen Stückzahlen und unterschiedlichen Ausgestaltungen benötigt werden. Schraubenfedern, die auch als gewundene Torsionsfedern bezeichnet werden, werden üblicherweise aus Federdraht herstellt und je nach der bei der Nutzung vorliegenden Belastung als Zugfedern oder Druckfedern ausgelegt.

Schraubenfedern werden heutzutage üblicherweise durch Federwinden mit Hilfe numerisch gesteuerter Federwindemaschinen hergestellt. Dabei wird ein Draht (Federdraht) unter der Steuerung durch ein NC-Steuerprogramm einer Umformeinrichtung der Federwindemaschine zugeführt und mit Hilfe von Werkzeugen der Umformeinrichtung, z.B. Windestiften und einem oder mehreren Steigungswerkzeugen, zu einer Schraubenfeder umgeformt. Nach Abschluss einer Umformoperation wird die fertiggestellte Schraubenfeder unter der Steuerung durch das NC-Steuerprogramm mittels eines Schnittsystems von dem zugeführten Draht abgetrennt.

In der Regel schließen sich weitere Bearbeitungsschritte und/oder Kontrollschritte an, um aus der fertig gewundenen und vom Draht abgetrennten Schraubenfeder eine gebrauchsfertige Schraubenfeder mit den gewünschten mechanischen und geometrischen Eigenschaften zu erhalten. Daher sind Federwindemaschinen häufig in ein komplexeres System (Fertigungssystem) integriert, das zusätzlich zu (wenigstens) einer Federwindemaschine wenigstens eine Nachfolgemaschine sowie ein Transportsystem zum Transportieren der Schraubenfedern von der Federwindemaschine zur Nachfolgemaschine umfasst. Eine Nachfolgemaschine kann z.B. eine Wärmebehandlungseinheit aufweisen und/oder eine Kontrollstation zur Kontrolle geometrischer Eigenschaften der Schraubenfeder (z.B. Federlänge). Bei Schraubenfedern, die für ihre Anwendung geschliffene Enden benötigen, kann sich auch eine Federendenschleifmaschine als Nachfolgemaschine anschließen.

Die Offenlegungsschrift DE 24 17 685 A1 beschreibt eine Vorrichtung zum Transportieren von nacheinander zugeführten Schraubenfedern von einer Federwindemaschine zu einer Arbeitsmaschine, insbesondere einer Federendenschleifmaschine Die Vorrichtung weist eine pneumatische Fördereinrichtung auf, die eine am Anfang der Förderstrecke angeordnete Saugeinrichtung, eine daran sich anschlie8ende Vorrichtung zur Förderung der Schraubenfedern in axialer Richtung im Druckluftstrom, eine daran sich anschließende Rohrleitung und eine am Ende der Rohrleitung vor der Werkstückaufnahme der Arbeitsmaschine angeordnete und von dieser gesteuerten Vereinzelungseinrichtung umfasst. Die Rohrleitung des Ausführungsbeispiels endet in einem gleichachsig zu einer Schraubenfeder-Aufnahme der nachgeordneten Arbeitsmaschine angeordneten Schacht, der zwei in axialer Richtung des Rohres mit Abstand hintereinander angeordnete Finger aufweist, deren Abstand voneinander etwa der Läge einer Schraubenfeder entspricht, und die in den Schacht wechselweise eingreifend angeordnet sind. Damit kann sichergestellt werden, dass jeder Werkstückaufnahme nur eine einzige Schraubenfeder zugeführt wird.

Es besteht Bedarf danach, die Taktzeiten von Fertigungssystemen immer weiter zu erhöhen, um die Produktivität zu steigern.

### AUFGABE UND LÖSUNG

Es ist eine Aufgabe der Erfindung, ein Verfahren und ein System zur Herstellung von Schraubenfedern bereitzustellen, die im Vergleich zu herkömmlichen Verfahren und Systemen einen störungsfreien Langzeitbetrieb mit besonders hoher Ausbringungsleistung ermöglichen. Zur Lösung dieser Aufgabe stellt die Erfindung ein Verfahren mit den Merkmalen von Anspruch 1 bereit. Weiterhin wird ein System mit den Merkmalen von Anspruch 6 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei dem Verfahren und dem System zur Herstellung von Schraubenfedern aus Draht wird ein Draht als Ausgangsmaterial von einem "endlosen" Drahtvorrat mittels einer Zuführeinrichtung zu einer numerisch gesteuerten Federwindemaschine gefördert. In der Federwindemaschine werden Abschnitte des Drahtes mittels einer Einzugseinrichtung sukzessive einer Umformeinrichtung zugeführt und dort jeweils in einer Umformoperation zu Schraubenfedern umgeformt. Die Umformeinrichtung weist Umformwerkzeuge auf, zum Beispiel Windestifte und ggf. ein oder mehrere Steigungswerkzeuge. Jede Schraubenfeder wird nach der Umformoperation mithilfe einer Schnitteinrichtung vom zugeführten Draht abgetrennt. Die abgetrennten Schraubenfedern werden danach sukzessive, also Stück für Stück nacheinander, durch eine Rohrleitung eines pneumatischen Fördersystems hindurch in eine Federaufnahme einer Nachfolgemaschine transportiert.

Die Nachfolgemaschine hat mindestens eine Federaufnahme zur Aufnahme einer einzelnen Schraubenfeder. Das pneumatische Fördersystem weist hinter einer Einlassöffnung der Rohrleitung eine Einspeisungseinrichtung für Druckfluid auf, die zum Beschleunigen der Schraubenfedern in Transportrichtung innerhalb der Rohrleitung dient. An einer Austrittsseite der Rohrleitung ist eine Austrittsöffnung zur Abgabe von Schraubenfedern in die jeweils zugeordneten Federaufnahmen angeordnet.

Das unter Druck eingeleitete Förderfluid, in der Regel Druckluft, dient einerseits der Vereinzelung der sukzessive nacheinander durch die Einführöffnung eingeführten Schraubenfedern und andererseits dem Transport der Schraubenfedern durch die Rohrleitung. In der Regel haben unmittelbar aufeinanderfolgende Schraubenfedern einen Abstand zueinander, werden also in vereinzelter Form transportiert. Dieser Transport sollte so schnell wie möglich erfolgen. Ein Transport mit hoher Transportgeschwindigkeit ist anzustreben, wenn besonders hohe Stückleistungen und entsprechend hohe Taktzahlen angestrebt werden.

Die Erfinder haben festgestellt, dass bei der Übergabe der Schraubenfedern von der Rohrleitung zu den Federaufnahmen der Nachfolgemaschine je nach Fördergeschwindigkeit und Federtyp Schraubenfedern im Bodenbereich einer Federaufnahme auftreffen und dann in Richtung Rohrleitung zurückspringen können. Dieses Zurückspringen, dass sich aufgrund Richtungsumkehr bei impulsartiger Wandlung von kinetischer Energie in Spannungsenergie und zurück in kinetische Energie ergibt, ist nur schwer kontrollierbar und kann zu Kollisionen und dadurch verursachten Störungen im Prozessablauf führen.

Zur Vermeidung solcher Probleme könnte man die Rohrleitung so weit verlängern, dass es auf dem langen Transportweg durch Reibung an den Wänden der Rohrleitung allmählich zum Abbau der kinetischen Bewegungsenergie kommt. Alternativ oder zusätzlich können Rohrabschnitte aufsteigend ausgebildet sein, um unter Nutzung der Schwerkraft eine Reduzierung der Transportgeschwindigkeit zu erzielen. Diese Maßnahmen haben sich jedoch nur als bedingt tauglich herausgestellt.

Ein praktisch störungsfreier Betrieb auch bei hohen Stückleistungen und hohen Transportgeschwindigkeiten in der Rohrleitung lässt sich gemäß der beanspruchten Erfindung dadurch erreichen, dass ein kollisionsgesicherter Federtransfer bereitgestellt wird, der eine kontinuierliche Übergabe von Schraubenfedern von der Rohrleitung durch eine Austrittsöffnung der Rohrleitung hindurch in zugeordnete Federaufnahmen und eine automatische Verhinderung eines Wiedereintritts von durch die Austrittsöffnung in Richtung Federaufnahme hindurchgetretenen und vom Bereich der Federaufnahme zurückspringenden Schraubenfedern zurück in die Rohrleitung umfasst.

Entsprechend umfasst ein System gemäß der beanspruchten Erfindung ein kollisionsgesichertes Federtransfersystem, das durch seine konstruktiven und funktionalen Merkmale für eine kontinuierliche Übergabe von Schraubenfedern von der Rohrleitung durch eine Austrittsöffnung der Rohrleitung hindurch in zugeordnete Federaufnahmen und eine automatische Verhinderung eines Wiedereintritts von durch die Austrittsöffnung in Richtung Federaufnahme hindurchgetretenen und vom Bereich der Federaufnahme zurückspringenden Schraubenfedern zurück in die Rohrleitung ausgebildet ist.

Die Formulierung "kontinuierliche Übergabe" beschreibt dabei u.a., dass die Schraubenfedern auf dem Weg durch die Rohrleitung bis zur Austrittsöffnung und danach bis zur Federaufnahme an keiner Stelle bis zum Stillstand abgestoppt werden. Idealerweise berühren sich unmittelbar aufeinander folgende Schraubenfedern während des kompletten Transports nicht, vielmehr bleibt ein ausreichender Abstand bestehen. In der Vorwärtsbewegung gibt es somit keine Kollisionen. Für den eventuell eintretenden Fall einer zurückspringenden Feder wird eine Kollision mit einer nachfolgenden Feder durch die aktive, automatische Verhinderung des Wiedereintritts vermieden bzw. verhindert.

Um den kollisionsfreien Federtransfer zu erreichen, ist gemäß der beanspruchten Erfindung eine automatische Blockierung der Rohrleitung gegen Wiedereintritt einer vom Bereich der Federaufnahme zurückspringenden Schraubenfeder nach Durchtritt durch die Austrittsöffnung bzw. eine dazu ausgebildete Blockierungseinrichtung vorgesehen. Damit können Kollisionen nachfolgender ankommender Schraubenfedern mit rückspringenden Schraubenfedern zuverlässig verhindert werden. Die Blockierung wird vorzugsweise durch eine temporäre Änderung des Durchmessers der Austrittsöffnung auf einen Durchmesser erreicht, der kleiner als der Maximaldurchmesser der Schraubenfeder ist.

Der Maximaldurchmesser einer Schraubenfeder entspricht bei einer zylindrischen Schraubenfeder ihrem Außendurchmesser, der nominell über die gesamte Federlänge konstant ist. Bei Schraubenfedern mit über die Länge variierenden Durchmesser, z.B. bei tonnenförmigen oder kegelförmigen Schraubenfedern, entspricht der Maximaldurchmesser dem Außendurchmesser an der dicksten Stelle.

Gemäß einer Weiterbildung werden zusätzlich die sukzessive transportierten und im Endbereich der Rohrleitung eintreffenden Schraubenfedern im Bereich einer am Ende der Rohrleitung angeordneten Bremseinrichtung über eine Bremsstrecke von einer Eintrittsgeschwindigkeit bei Eintritt in die Bremsstrecke auf eine gegenüber der Eintrittsgeschwindigkeit reduzierte endliche Austrittsgeschwindigkeit beim Austritt aus der Bremsstrecke derart abgebremst, dass die Schraubenfedern kontinuierlich, d.h. ohne gestoppt bzw. angehalten zu werden, und ohne gegenseitige Berührung im Takt des Eintritts mit der Austrittsgeschwindigkeit durch eine Austrittsöffnung in Richtung Federaufnahme abgegeben werden. "Im Takt des Eintritts" bedeutet insbesondere, dass auf jede Schraubenfeder im Wesentlichen die gleiche Bremswirkung bzw. Verzögerungswirkung ausgeübt werden soll.

Man verlässt sich also nicht auf nicht zu vermeidende, aber schwer kontrollierbare Reibungseffekte entlang einer gegebenenfalls sehr langen Transportstrecke innerhalb der Rohrleitung, sondern stellt eine dedizierte Bremseinrichtung mit definierbarer Bremswirkung am Ende der Rohrleitung bereit. Die Schraubenfedern werden dabei nicht zum Stillstand gebracht bzw. gestoppt, sondern bleiben in kontrollierter Bewegung und treten dann im Takt ihrer Herstellung mit einer endlichen, aber nicht zu hohen Austrittsgeschwindigkeit aus der Rohrleitung aus und in die zugehörige Federaufnahme hinein, ohne dass es in störendem Ausmaß zu einem Zurückfedern der Schraubenfedern kommen kann. Die Bremsstrecke hat vorzugsweise eine Länge, die nur einen Bruchteil der Länge der gesamten Förderstrecke zwischen Eintrittsöffnung und Austrittsöffnung beträgt, z.B. weniger als 10% oder weniger als 5% dieser Länge, z.B. zwischen 0,5% und 5% der Länge der gesamten Förderstrecke.

Bei richtiger Einstellung der Bremswirkung verhindert eine solche Bremseinrichtung die durch zurückspringende Schraubenfedern verursachten Probleme dadurch, dass den Schraubenfedern durch den Bremsvorgang so viel kinetische Energie entzogen wird, dass ein Zurückspringen vermieden oder im Ausmaß so stark verringert wird, dass die Federn nicht bis zur Austrittsöffnung zurückspringen können. Die Bremseinrichtung adressiert das Problem somit an seiner Wurzel, nämlich an der ggf. zu hohen kinetischen Energie beim Verlassen der Rohrleitung. Wird diese Energie ausreichend reduziert, kann es trotz schnellem Antransports in der Regel vermieden werden, dass Federn zu weit zurückspringen.

Durch die automatische Blockierung in Kombination mit der Bremseinrichtung kann die Prozesssicherheit weiter erhöht werden und es kann zuverlässig sichergestellt werden, dass Schraubenfedern nicht aufgrund von Rückspringen in die Rohrleitung zurückgelangen können. Eine automatische Blockierung der Rohrleitung bzw. eine dazu ausgebildete Blockierungseinrichtung kann bei Bedarf auch für sich alleine genommen, also ohne eine Bremseinrichtung, den Wiedereintritt verhindern.

Gemäß einer Weiterbildung ist vorgesehen, dass die Austrittsöffnung des Federtransfersystems bzw. der Rohrleitung als durchmesservariable Austrittsöffnung ausgebildet ist, die eine temporäre, vorzugsweise stufenlose und vollständig reversible Änderung des Durchmessers der Austrittsöffnung zwischen einem ersten Durchmesser und einem zweiten Durchmesser erlaubt, wobei der erste Durchmesser kleiner als der Maximaldurchmesser der Schraubenfeder ist und der zweite Durchmesser ein Hindurchtreten der Schraubenfeder durch die Austrittsöffnung erlaubt. Eine temporäre Vergrößerung des Durchmessers auf ein Durchlassmaß (zweiter Durchmesser) erlaubt den Federdurchtritt. Bei Verkleinerung auf Untermaß (erster Durchmesser) wirkt die Austrittsöffnung als Blockierungseinrichtung, so dass keine Schraubenfeder hindurchpasst.

Bei manchen Ausführungsformen ist eine gesonderte Blockierungseinrichtung mit mindestens einem Verriegelungselement vorgesehen, das in Reaktion auf Steuersignale mithilfe eines Antriebs aus einer zurückgezogenen Neutralstellung oder Neutralkonfiguration automatisch in eine Blockierungsstellung oder Blockierungskonfiguration überführt werden kann, um den Rückweg zu blockieren. Das Verriegelungselement kann z.B. beweglich gelagert sein und von einem elektrisch ansteuerbaren Hubmagneten angetrieben werden, ggf. auch pneumatisch oder mithilfe eines Antriebsmotors. Es kann sich auch um ein durchmesserveränderliches Verriegelungselement handeln.

Bei manchen Ausführungsformen weist die Bremseinrichtung eine selbsttätig schließende Zuführdüse auf, die einen Düsenkörper mit einem durchmesservariablen Abschnitt aufweist, der einen Innendurchmesser aufweist, welcher in einem lastfreien Grundzustand kleiner als der Außendurchmesser der geförderten Schraubenfedern ist und durch eine hindurchtretende Schraubenfeder auf einen Durchlassquerschnitt elastisch erweiterbar ist, wobei der durchmesservariable Abschnitt vorzugsweise die Austrittsöffnung bildet. Die selbsttätig schließende Zuführdüse erfüllt dabei eine Doppelfunktion. Zum einen wird eine gezielt einstellbare Bremswirkung erreicht, da die hindurchtretenden Schraubenfedern sich durch den durchmesservariablen Abschnitt hindurchzwängen müssen und dieser unter elastischen Kräften an die Windungen der durchtretenden Schraubenfeder angedrückt wird. Dadurch ergibt sich eine gut kontrollierbare Bremswirkung. Außerdem wirkt die Zuführdüse ähnlich wie ein Rückschlagventil, da nach Hindurchtreten einer Schraubenfeder der Durchlassquerschnitt zu klein ist, um eine eventuell von der Federaufnahme zurückspringende Schraubenfeder rückwärts hindurchzulassen. Hier wird also zum Abbremsen der Schraubenfeder eine Düse am Ende des Transportweges genutzt, die der Schraubenfeder nach der Passage der Zuführdüse den Rückweg in die Rohrleitung verschließt. Die Zuführdüse fungiert also auch als Blockierungseinrichtung zur automatischen Blockierung der Rohrleitung gegen Wiedereintritt einer vom Bereich der Federaufnahme zurückspringenden Schraubenfeder nach Durchtritt durch die Austrittsöffnung.

Gemäß einer Weiterbildung weist die Zuführdüse einen eintrittsseitigen hülsenförmigen Basisabschnitt und daran anschließend eine ringförmige Anordnung mehrerer Finger auf, die mit dem Basisabschnitt über federelastische Filmscharnierabschnitte radial verschwenkbar verbunden sind, wobei freie Enden der Finger die Austrittsöffnung umschließen. Der Basisabschnitt kann nach Art einer in Umfangsrichtung geschlossenen Hülse ausgebildet sein. Die Hülsenwandung wird zur Austrittsseite hin durch mehrere in radiale Richtung durchgehende Längsschlitze in eine Vielzahl elastische verschwenkbare Finger aufgeteilt. Die Zuführdüse kann z.B. drei, vier, fünf, sechs, sieben oder acht vorzugsweise zueinander identisch gestaltete Finger aufweisen.

Um einerseits einen möglichst stabilen Basisabschnitt zu erhalten und andererseits die Federeigenschaften der elastischen Finger so einzustellen, dass eine hindurchtretende Schraubenfeder die Finger nach außen aufspreizen kann und dennoch zum Abbremsen geeignete Andrückkräfte verbleiben, haben sich die federelastischen Filmscharnierabschnitte als äußerst zweckmäßig herausgestellt. Durch geeignete Auslegung der Länge, Dicke und geometrische Gestaltung der Filmscharnierabschnitte können die im Bereich der Austrittsdüse auftretenden, in Radialrichtung wirkenden elastischen Kräfte sehr präzise an die jeweilige Anwendungssituation angepasst werden. Bei der Zuführdüse kann es sich um ein einstückiges Bauteil nach Art einer einseitig geschlitzten Hülse handeln.

Gemäß einer Weiterbildung ist die Zuführdüse aus Kunststoff gefertigt, und zwar insbesondere mittels eines 3D-Druckverfahrens. Dadurch sind individuelle Anpassungen an die jeweilige Federgeometrie und Förderleistung schnell und präzise erzielbar.

Um andererseits zu erreichen, dass die in Kontakt mit der durchtretenden Schraubenfeder kommenden freien Enden dauerhaft ihre Aufgabe erfüllen können, sind bei bevorzugten Ausführungsformen an den freien Enden der Finger Verschleißschutzeinsätze aus einem verschleißfesten Material, beispielsweise aus gehärtetem Stahl eingesetzt. Diese können achsparallele Führungsleisten bilden, die mit ihren radial innen liegenden Führungsflächen die Austrittsöffnung begrenzen und in Kontakt mit den Windungen der Schraubenfeder treten.

In vielen Fällen hat es sich als zweckmäßig herausgestellt, wenn die Schraubenfedern in mehreren Bremsstufen, insbesondere in zwei aufeinanderfolgenden Bremsstufen mit unterschiedlicher Bremswirkung abgebremst werden. Hierdurch lässt sich die Gesamtbremsleistung noch besser an die jeweiligen Betriebsbedingungen und Federtypen anpassen.

Bei manchen Ausführungsformen umfasst eine Bremsstufe eine Reibungsbremsung in einem durchmesserangepassten Führungskanal und eine nachfolgende Bremsstufe ein Hindurchzwängen durch eine elastisch aufweitbare Austrittsöffnung mit Unterdurchmesser. Während der vorgeschalteten Reibungsbremsstufe in einem durchmesserangepassten, zylindrischen Führungskanal kann die Schraubenfeder in ihrer Orientierung stabilisiert und teilgebremst werden, die teilgebremste Schraubenfeder wird dann beim Hindurchzwängen durch die aufweitbare Austrittsöffnung in einer zweiten Stufe stark gebremst.

Die Bremseinrichtung kann dazu eine federspezifisch angepasste Federführungshülse mit einem zylindrischen Führungskanal aufweisen, der einen Innendurchmesser aufweist, der an den Außendurchmesser der Schraubenfedern derart angepasst ist, dass die Schraubenfedern im Wesentlichen spielfrei durch den Führungskanal hindurchpassen. Der zylindrische Führungsabschnitt kann eine Länge haben, die einem Vielfachem des Innendurchmessers entspricht, beispielsweise mindestens dem 5-fachen, vorzugsweise eine Länge, die im Bereich zwischen dem 5-fachen und 10-fachen des Innendurchmessers liegt. Dieser Innendurchmesser kann kleiner sein als der Innendurchmesser eines vorgeschalteten Rohrleitungs-Hauptabschnitts der Rohrleitung, die den größten Teil der Transportstrecke zwischen Federwindemaschine und Nachfolgemaschine überbrückt. Dieser Rohrleitungs-Hauptabschnitt kann beispielsweise mithilfe eines Kunststoffschlauchs, zum Beispiel aus PTFE, realisiert werden, während die Federführungshülse zweckmäßig aus einem metallischen Werkstoff, gefertigt sein kann, beispielsweise aus Stahl.

Die Federführungshülse kann an einer Eintrittsseite des Führungskanals einen sich zur Eintrittsseite konisch erweiterten Einführabschnitt aufweisen, der vorzugsweise in einen zylindrischen Aufsteckabschnitt übergeht, dessen Innendurchmesser im Wesentlichen dem Außendurchmesser eines vorgeschalteten Abschnitts der Rohrleitung entspricht, beispielsweise dem austrittsseitigen Ende des Rohrleitungs-Hauptstücks. Die federspezifisch angepasste Federführungshülse kann als leicht auswechselbares Wechselteil ausgebildet sein, um die pneumatische Fördereinrichtung im Rahmen des nutzbaren Durchmesserbereichs des Rohrleitungs-Hauptstücks schnell und unkompliziert an unterschiedliche Federdurchmesser anzupassen.

Die Federführungshülse ist vorzugsweise zwischen einem Rohrleitungs-Hauptstück und der selbsttätig schließenden Zuführdüse angebracht, so dass mithilfe der Federführungshülse die erste Bremsstufe eines mehrstufigen Bremsprozesses realisierbar ist, dessen zweite Stufe im Bereich der selbsttätig schließenden Zuführdüse abläuft.

Als weitere Sicherheitseinrichtung im Rahmen des Abbremsens herangeführter Schraubenfedern weist die Bremseinrichtung bei manchen Ausführungsformen wenigstens einen Magneten auf, der dafür konfiguriert ist, eine in die Federaufnahme eingeführte Schraubenfeder mittels magnetischer Kräfte abzubremsen und in der Federaufnahme zu halten. Bei dem Magneten kann es sich um einen Permanentmagneten oder um einen bei Bedarf elektrisch erregbaren Elektromagneten handeln. Anstelle eines einzigen Magneten können zwei oder mehr Magneten vorgesehen sein, die vorzugsweise in Längsrichtung der Federaufnahme übereinanderliegen, so dass flexibel eine ausreichende magnetwirksame Strecke aufgebaut werden kann.

Die magnetische Bremseinrichtung ist vorzugsweise an einer Ladeposition der Nachfolgemaschine angeordnet, wirkt als nur auf diejenige Federaufnahme, die gerade beladen bzw. befüllt werden soll.

Solche Zusatzeinrichtungen mit Magneten sind vor allem wirksam für Schraubenfedern, die aus einem magnetisierbaren Drahtmaterial bestehen, z.B. aus einem magnetisierbaren Federstahl. Es wurde festgestellt, dass eine magnetische Bremswirkung auch bei nominell unmagnetischen Stahlwerkstoffen erzielt werden kann, zum Beispiel bei gewissen nichtrostenden Stählen, die als unmagnetisch gelten. Derartige Materialien können jedoch aufgrund der hohen Umformgrade beim Federwindeprozess eine durch Umformen induzierte Magnetisierbarkeit erhalten, so dass diese mithilfe von Magneten der Bremseinrichtung wirksam abgebremst und in der Federaufnahme gehalten werden können.

Mithilfe des pneumatischen Fördersystems können unterschiedliche Nachfolgemaschinen zur Weiterbearbeitung und/oder Weiterbehandlung fertiger Schraubenfedern mit einer Federwindemaschine verbunden werden. Bei bevorzugten Ausführungsformen weist die Nachfolgemaschine mehrere Arbeitsstationen und eine interne Transporteinheit zum Transportieren von Schraubenfedern entlang einer Transportstrecke zu den Arbeitsstationen auf, wobei die Transporteinheit mittels eines Drehantriebs um eine vorzugsweise vertikale Drehachse drehbar ist und eine Vielzahl von Federaufnahmen aufweist, die in Form eines Rings um die Drehachse herum angeordnet und zur Aufnahme jeweils einer einzelnen Schraubenfeder ausgebildet sind. Eine der Arbeitsstationen ist eine Ladestation und die Rohrleitung führt derart zu der Ladestation, dass ein die Austrittsöffnung enthaltender Endabschnitt der Rohrleitung koaxial zu einer in der Ladeposition positionierten Federaufnahme angeordnet ist. Damit ist eine direkte Übergabe einer herangeförderten Schraubenfeder durch die Austrittsöffnung hindurch in die zur Aufnahme der Feder bereite Federaufnahme möglich.

In vielen Fällen ist es erforderlich, unmittelbar nach dem Federwinden die fertigen Schraubenfedern einer Wärmebehandlung zu unterziehen, beispielsweise um die durch das Federwinden eingebrachten Biegeeigenspannungen zu reduzieren und die Streckgrenze wieder anzuheben und/oder um eine nicht gewünschte, durch Umformen induzierte Magnetisierung wieder zu beseitigen. Daher weist die Nachfolgemaschine bei bevorzugten Ausführungsformen eine Wärmebehandlungseinheit auf, die eine der Ladestation nachgeschaltete Erwärmungsstation und vorzugsweise auch eine der Erwärmungsstation nachgeschaltete Kühlstation umfasst. Eine Schraubenfeder kann ausgehend von der Ladestation zunächst zur Erwärmungsstation transportiert, dort entsprechend einem Erwärmungsprofil, zum Beispiel induktiv oder durch Hindurchleiten von elektrischem Strom, erwärmt beziehungsweise angelassen werden und danach durch Weitertakten der internen Transporteinheit in den Bereich der Kühlstation transportiert werden, um die Feder auf eine für die Weiterverarbeitung geeignete tiefere Temperatur herunterzukühlen. Die Kühlstation kann eine einzige Kühleinheit aufweisen. Vorzugsweise umfasst die Kühlstation zwei oder mehr Kühleinheiten, die in Transportrichtung nacheinander angeordnet sind, um insgesamt ausreichend Zeit für die Abkühlung zu erhalten und ggf. in mehreren Stufen und/oder nach einem komplexeren Abkühlprofil abkühlen zu können.

Zusätzlich können entlang der Transportstrecke eine oder mehrere weitere Arbeitsstationen vorgesehen sein, beispielsweise eine Setzstation, eine Messstation, eine Ausschleusungsstation für Schlechtteile, eine Ausschleusungsstation zu einer Qualitätskontrolleinheit, eine Ausschleusungsstation für Gutteile und/oder eine Leerkontrollstation. Die Messstation kann beispielsweise als Längenmessstation und/oder als Durchmessermessstation konfiguriert sein, um die interessierenden Endmaße der Schraubenfeder nach der Wärmebehandlung und ggf. nach der Setzoperation zu erfassen. Liegen die Messwerte außerhalb des spezifizierten Bereichs, werden die Schraubenfedern als Schlechtteile angesehen und an der Ausschleusungsstation für Schlechtteile ausgeschleust, zum Beispiel in einen Sammelbehälter. Bei den nicht ausgeschleusten Teilen handelt es sich dann um Gutteile. Einzelne davon können beispielsweise für sporadische ausführliche Qualitätskontrollen an der Ausschleusungsstation zu einer Qualitätskontrolleinheit ausgeschleust werden. Die dann noch in ihren Federaufnahmen verbleibenden Schraubenfedern sind dann Gutteile, die an ihrer entsprechenden Ausschleusungsstation einer Nachfolgemaschine oder einer anderen Arbeitsstation zugeführt werden können, vorzugsweise wieder durch eine Rohrleitung eines pneumatischen Fördersystems.

Ein wichtiger Beitrag für einen störungsfreien Betrieb des Fertigungssystems wird bei manchen Ausführungsformen dadurch geleistet, dass ein Betriebssteuerungssystem mit einer Vielzahl von Sensoren zur Überwachung der Fertigung und zur Regelung von Fertigungsparametern in Abhängigkeit von Sensorsignalen vorgesehen ist.

Gemäß einer Weiterbildung ist das Betriebssteuerungssystem konfiguriert, eine Regelung der Eintrittsgeschwindigkeit auf einen Wert innerhalb eines Spezifikationsbereichs durchzuführen. Dies kann erreicht werden durch Erfassen einer Ist-Geschwindigkeit der Schraubenfedern im Bereich einer Messstrecke, die mit geeigneter Länge zwischen der Federwindemaschine und der Bremseinrichtung liegt; Vergleichen der Ist-Geschwindigkeit mit einer Soll-Geschwindigkeit zur Ermittlung einer Geschwindigkeitsabweichung und ggf. Verändern einer Förderleistung in Abhängigkeit von der Geschwindigkeitsabweichung. Damit kann erreicht werden, dass die Bremseinrichtung immer in dem optimalen Eintrittsgeschwindigkeitsbereich arbeiten kann, für den sie konstruktiv ausgelegt ist.

Gemäß einer Weiterbildung umfasst das Betriebssteuerungssystem eine oder mehrere der nachfolgend erläuterten Funktionsgruppen.

Eine Funktionsgruppe, die zwei mit Abstand zueinander an unterschiedlichen Positionen der Rohrleitung angeordnete Federdurchtrittssensoren aufweist, wobei Sensorsignale der Federdurchtrittssensoren für eine Flugzeiterfassung in der Rohrleitung verarbeitet werden. Das Betriebssteuerungssystem kann dadurch für eine Flugzeiterfassung konfiguriert sein. Diese kann z.B. dazu genutzt werden, eine automatische Abschaltung zu triggern, falls Federn derart zu schnell oder zu langsam transportiert werden, dass dies auf eine Störung hindeuten könnte.

Alternativ oder zusätzlich ist eine Funktionsgruppe mit zwei mit Abstand zueinander an unterschiedlichen Positionen der Rohrleitung angeordnete Federdurchtrittssensoren vorgesehen, wobei Sensorsignale der Federdurchtrittssensoren zur Ermittlung der Eintrittsgeschwindigkeit der Schraubenfedern in die Bremsstrecke verarbeitet werden. Vorzugsweise wird dann die Förderleistung des Fördersystems in Abhängigkeit von der ermittelten Eintrittsgeschwindigkeit geregelt, und zwar in der Weise, dass die Eintrittsgeschwindigkeit im Wesentlichen konstant und innerhalb eines Sollbereichs für die Eintrittsgeschwindigkeit bleibt, für den die Bremseinrichtung ausgelegt ist. Zeigt sich also beispielsweise, dass aufgrund von Verschmutzungen etc. die Schraubenfedern zunehmend zu langsam durch die Rohrleitung gefördert werden, was sich in verlängerten Flugzeiten und/oder geringer werdenden Eintrittsgeschwindigkeiten ausdrückt, dann könnte es sein, dass die Bremseinrichtung die zu langsam eintretenden Schraubendruckfedern nicht mehr zuverlässig hindurchlässt. Durch Steigerung des Fördervolumens des Förderfluids kann die Eintrittsgeschwindigkeit im Wesentlichen auf ihren Sollwert eingeregelt werden. In manchen Ausführungsformen ist dazu ein unmittelbar durch Sensorsignale ansteuerbares Proportionalventil vorgesehen, dass diese Förderleistungsregelung unter Umgehung der längeren Steuerstrecke über die Steuereinheit des Systems mit sehr kurzen Reaktionszeiten realisieren kann.

Für die Flugzeiterfassung und die Ermittlung der Eintrittsgeschwindigkeit kann ein und dasselbe Sensorpaar genutzt werden. Meist werden unterschiedliche Sensorpaare für diese unterschiedlichen Zwecke genutzt. Ein Sensor kann mehr als einer Funktionsgruppe zugeordnet sein.

Eine Funktionsgruppe kann einen Austrittssensor zur Erfassung eines Austritts einer Schraubenfeder aus der Austrittsöffnung aufweisen. Somit ist dem Betriebssteuerungssystem jederzeit bekannt, wann eine Schraubenfeder vom Fördersystem in Richtung Federaufnahme austritt und wie viele Federn absolut und pro Zeiteinheit austreten.

Bei Ausführungsformen, bei denen die Nachfolgemaschine mehrere Arbeitsstationen und eine interne Transporteinheit mit einer Vielzahl von Federaufnahmen zum Transportieren von Schraubenfedern zu den Arbeitsstationen aufweist, kann eine Steuerung der Transporteinheit in Abhängigkeit von der Anlieferung von Schraubenfedern vorgesehen sein. Beispielsweise kann die interne Transporteinheit der Nachfolgemaschine in Abhängigkeit von Sensorsignalen des Austrittssensors derart gesteuert werden, dass die interne Transporteinheit stillgesetzt wird, wenn ein Austritt einer Schraubenfeder detektiert wird. Dadurch können unerwünschte Kollisionssituationen vermieden werden, die zur Deformation von Schraubenfedern und/oder zu Schäden an den Einrichtungen der Maschine führen könnten.

Das Betriebssteuerungssystem kann weiterhin einen Gutteilsensor zur Erfassung der Anzahl ausgeschleuster Gutteile, einen Schlechtteilesensor zur Erfassung der Anzahl ausgeschleuster Schlechtteile, einen Qualitätskontrollsensor zur Erfassung der Anzahl zur Qualitätskontrolle ausgeschleuster Schraubenfedern und/oder einen Leerkontrollsensor zur Erfassung der Anzahl von Schraubenfedern enthalten, die an einer Leerkontrollstation ausgeschleust werden.

Mithilfe der Signale dieser Sensoren kann eine 100%ige Teilezahlüberwachung durchgeführt werden, wodurch jederzeit jede der gefertigten Schrauben einer der entsprechenden Weiterverarbeitungskategorien zugeordnet werden können. Damit ist auch nach Abschluss der Fertigung eine 100%-Verbleibkontrolle der Schraubenfedern möglich.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind.
- Fig. 1: zeigt eine schematische Übersichtsdarstellung eines Ausführungsbeispiels eines mit einer Federwindemaschine und einer Nachfolgemaschine ausgestatteten Fertigungssystems zur Herstellung von Schraubenfedern aus Draht;
- Fig. 2: zeigt ein Detail der Federwindemaschine mit kamerabasiertem Messsystem zur Überwachung der Federherstellung und einer Ansaugeinrichtung zum Einsaugen der Schraubenfedern in eine Rohrleitung eines pneumatischen Fördersystems;
- Fig. 3: zeigt eine Draufsicht auf den Arbeitsraum einer Nachfolgemaschine mit einer über die Rohrleitung bedienten Ladestation, einer Wärmebehandlungseinheit mit einer Erwärmungsstation und einer Kühlstation und weiteren Arbeitsstationen;
- Fig. 4: zeigt einen Schnitt durch eine zweistufige Bremseinrichtung mit einer Führungshülse und einer nachgeschalteten, selbsttätig schließenden Zuführdüse;
- Fig. 5: zeigt den Übergangsbereich zwischen der Bremseinrichtung und einer Federaufnahme der Nachfolgemaschiene, wobei neben der Federaufnahme eine magnetische Bremseinheit angeordnet ist;
- Fig. 6: zeigt eine Ausführungsform einer selbsttätig schließenden Zuführdüse;
- Fig. 7: zeigt eine Ausführungsform einer schaltbaren Zuführdüse.

### DETAILLIERTE BESCHREIBUNG DER AUSFÜHRUNGSBEISPIELE

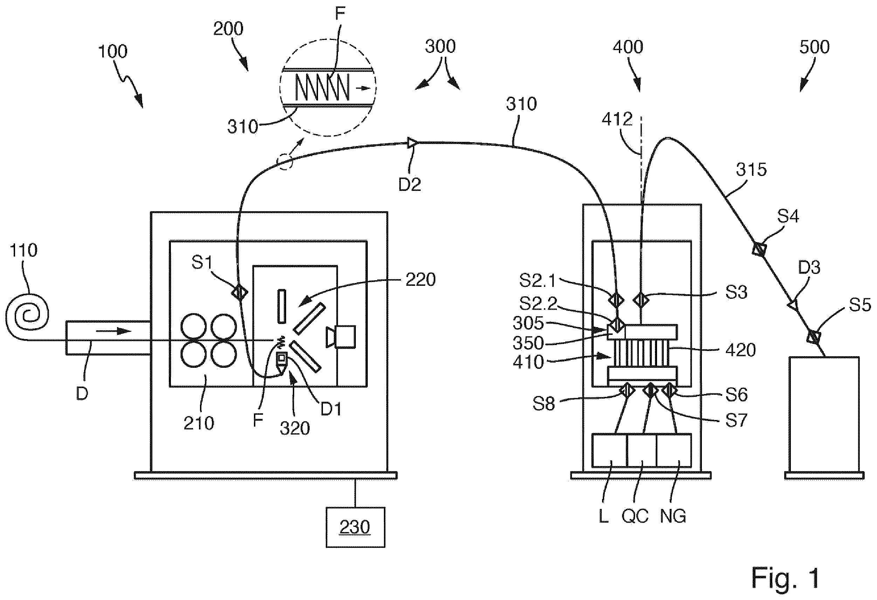

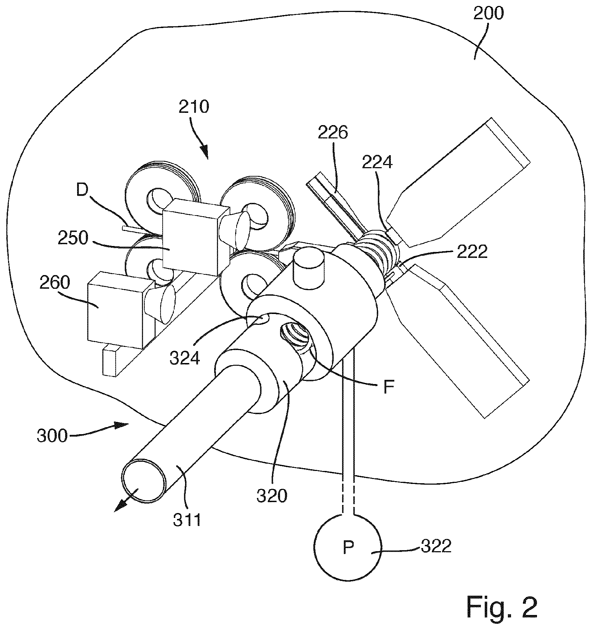

Die schematische Übersichtsdarstellung in Fig. 1 zeigt ein Ausführungsbeispiel eines Fertigungssystems 100 zur Herstellung von Schraubenfedern aus Draht. Die Schraubenfedern werden im Folgenden auch kurz als "Federn" bezeichnet, das Fertigungssystem kurz als "System". Fig. 2 zeigt Details der Federwindemaschine des Systems mit Komponenten eines kamerabasierten Messsystems und des pneumatischen Fördersystems.

Zu dem System gehört eine automatische Federherstellungsmaschine in Form einer computernumerisch gesteuerten Federwindemaschine 200. Diese hat eine mit Einzugsrollen ausgestattete Einzugseinrichtung 210, die aufeinander folgende Abschnitte eines Drahtes D mit einem numerisch gesteuerten Vorschubgeschwindigkeitsprofil in horizontaler Richtung in den Bereich einer Umformeinrichtung 220 einzieht. Der Draht wird dazu von einem auf einer Haspel vorgehaltenen Drahtvorrat (Coil) 110 kommend eingezogen und durch eine nicht gezeigte Richteinheit geführt. Der Draht D wird mithilfe von numerisch gesteuerten Werkzeugen der Umformeinrichtung 220 in einer Federwindeoperation zu einer Schraubenfeder F umgeformt. Zu den Umformwerkzeugen gehören zwei um 90° winkelversetzt angeordnete, radial zur gewünschten Federachse ausgerichtete, numerisch gesteuerte Windestifte 222, 224 und wenigstens ein Steigungswerkzeug 226, um numerisch gesteuert jederzeit die lokale Steigung der sich entwickelnden Feder vorzugeben (siehe Fig. 2) Weiterhin ist eine Schnitteinrichtung vorgesehen, die nach Abschluss einer Umformoperation eine fertige Schraubenfeder F mit einer linearen Arbeitsbewegung vom zugeführten Draht abtrennt. Die zu den beweglichen Komponenten gehörenden Maschinenachsen der CNC-Maschine werden durch eine computernumerische Steuereinrichtung 230 gesteuert.

Die Federwindemaschine 200 ist mit einem kamerabasierten, optischen Messsystem zur berührungslosen Echtzeiterfassung von Daten über die Geometrie einer aktuell hergestellten Feder ausgestattet. Zu dem Messsystem gehört eine CCD-Videokamera 250, die so installiert ist, dass ihr Bildfeld einen Abschnitt der sich entwickelnden Feder in der Nähe der Werkzeuge der Umformeinrichtung erfassen kann, sowie eine weitere Videokamera 260, mit der die Federlänge bestimmt werden kann. Mit Mitteln der Bilderfassung können aus den Kamerabildern Daten über die Federgeometrie der hergestellten Feder ermittelt werden, die in einem Rechner der Steuereinrichtung 230 mit entsprechenden Daten für eine gewünschte Soll-Geometrie verglichen werden. Dadurch ist es möglich, während des Entstehens eine Feder den Federwindeprozess zu überwachen und ggf. über Feedback von Messwerten den Federwindeprozess durch Änderungen der Stellwerte von Werkzeugen zu regeln (In-Prozess-Regelung). Außerdem ist es zeitnah mit der Federherstellung möglich zu erkennen, ob die hergestellte Feder ein Gutteil (Federgeometrie im Toleranzbereich) oder ein auszusortierendes Schlechtteil (Federgeometrie außerhalb des Toleranzbereichs) ist. Das optische Messsystem fungiert als Bestandteil eines Qualitätserfassungssystems.

Bei der Schraubenfeder F kann es sich um eine Schraubendruckfeder oder um eine Schraubenzugfeder jeweils mit zylindrischer oder von der Zylinderform abweichender Gestalt handeln. Der Federdurchmesser ist bei zylindrischen Schraubenfedern über die Länge der Federn konstant, er kann aber auch über die Länge variieren, wie z. B. bei kegelförmigen oder tonnenförmigen Schraubenfedern. Auch die Gesamtlänge der (unbelasteten) Feder kann für unterschiedliche Anwendungen stark variieren.

Die Federwindemaschine kann so aufgebaut sein und arbeiten wie in der DE 10 2010 014 385 B4 beschrieben. Auch andere Ausgestaltungen sind möglich.

Die abgetrennten Schraubenfedern F werden nach dem Abtrennen vom Draht mit Hilfe eines pneumatischen Fördersystems 300 sukzessive im Takt der Federwindemaschine mittels eines Druckluftstroms automatisch zu einer Nachfolgemaschine 400 gefördert, die mehrere Meter von der Federwindemaschine entfernt steht oder stehen kann.

Fig. 2 zeigt das der Federwindemaschine zugewandte Eintrittssende des Fördersystems mit einer an eine Druckluftquelle 322 angeschlossen Federeinsaugeinrichtung 320, die die fertigen Schraubenfedern im Maschinentakt in die Rohrleitung 310 des Fördersystems 300 einsaugt. Die maschinenferne Messkamera 260 kann das vordere Ende der Schraubenfeder durch ein Fenster 312 in der Wandung der Federeinsaugeinrichtung 320 (vgl. Fig. 2) ungestört erfassen.

Die Nachfolgemaschine 400 ist (genau wie das Fördersystem 300) Bestandteil des kompletten Systems 100 und dazu konfiguriert, an den zugeführten Schraubenfedern nachgeschaltete Operation durchzuführen. Die Nachfolgemaschine umfasst eine Wärmebehandlungseinheit für eine kontrollierte Wärmebehandlung der frisch gewundenen Federn. Einrichtungen zur Qualitätskontrolle der wärmebehandelten Federn und zur Sortierung und Weiterleitung zu wenigstens einer Nachfolgeanlage 500 sind integriert.

Die Nachfolgemaschine 400 umfasst eine interne Transporteinheit 410, die mittels eines Drehantriebs um eine vertikale Drehachse 412 drehbar ist. Die Transporteinheit 410 weist eine Vielzahl von außeraxial zu ihrer Drehachse angeordneten, vertikal ausgerichteten Federaufnahmen 420 auf, die jeweils eine einzige Schraubenfeder F für die Bearbeitung aufnehmen sollen. Die Federaufnahmen sind in Form eines Ringes um die Drehachse 412 herum angeordnet.

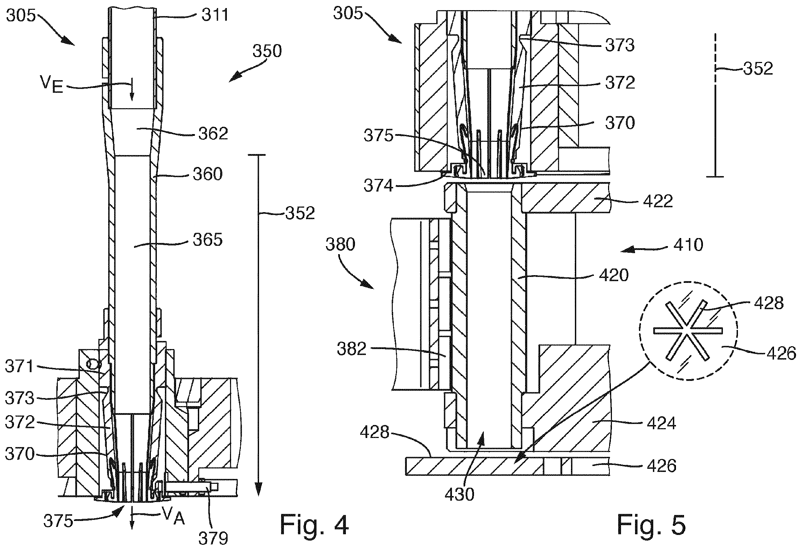

Die Federaufnahmen 420 werden im Wesentlichen durch zylindrische Hülsen aus einem elektrisch nicht-leitenden, verwindungssteifen und temperaturbeständigen Material gebildet. Die oberen und unteren Enden der vertikal ausgerichteten Federaufnahmen sind in einem oberen Ring 422 beziehungsweise einem unteren Ring 424 befestigt, die drehfest miteinander verbunden sind und die Federaufnahmen tragen (vgl. Fig. 5). Die Gesamtkonstruktion der drehbaren Komponenten wird hier auch als Ladeteller 410 bezeichnet. Unterhalb des Ladetellers ist ein nicht drehender Tragering 426 aus verschleißfestem Material montiert, dessen verschleißfeste ebene horizontale Oberseite 428 mit geringem Abstand unterhalb der Federaufnahmen angeordnet ist. Die aufgenommenen Federn stützen sich auf dieser Oberseite ab.

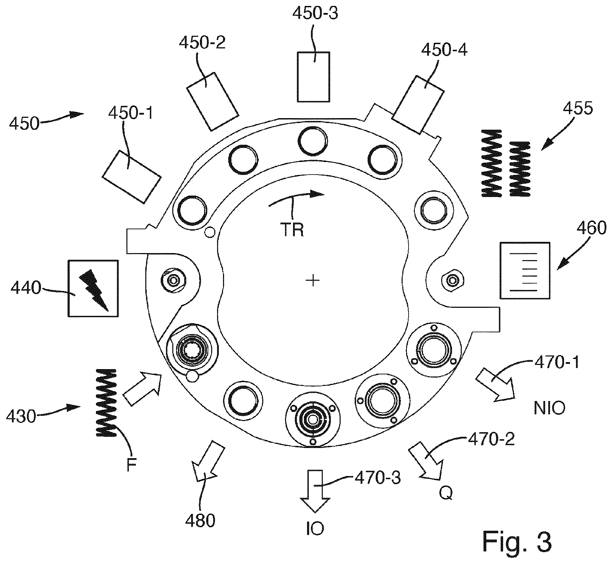

Um den Außenumfang der Transporteinheit 410 herum sind mehrere Arbeitsstationen der Nachfolgemaschine 400 angeordnet, die während des Betriebs der Nachfolgemaschine von einer in einer Federaufnahme 430 angeordneten Schraubenfeder sukzessive nacheinander durch Drehung der Transporteinheit angefahren werden. Die Draufsicht in Fig. 3 zeigt eine bevorzugte Konfiguration. An einer Ladestation 430 wird eine Federaufnahme mit einer einzelnen Schraubenfeder von vertikal oben beladen. Die dazu vorgesehenen Einrichtungen des pneumatischen Fördersystems 300 werden später noch ausführlich erläutert (vgl. Z.B. Fig. 5).

In Transportrichtung TR der Transporteinheit nachgeschaltet befindet sich eine Erwärmungsstation 440, in der die Aufheizung der Schraubenfeder beispielsweise induktiv oder durch Hindurchleiten von Heizstrom durchgeführt wird. Danach folgen beispielsweise vier Kühleinheiten 450-1, 450-2, 450-23, 450-4 einer mehrstufigen Kühlstationen 450, die an ein Kaltluftgebläse angeschlossen sind und die zunächst noch auf einige 100°C erwärmte Schraubenfeder mithilfe von gekühlter Luft schrittweise zumindest bis auf handwarme Temperatur (40°C oder weniger) herunterkühlen. Durch die Wärmebehandlung werden beispielsweise aus der Umformoperation resultierende innere Spannungen im Federdraht abgebaut und eine eventuell erzeugte Magnetisierung beseitigt werden.

Danach folgt in Transportrichtung eine Setzstation 455, in der eine Setzoperation durchgeführt werden kann. Diese wird in der Regel bei der Fertigung von Schraubendruckfedern aus folgendem Grund genutzt. Übersteigt bei Belastung der Feder die Schubspannung den zulässigen Wert, tritt eine bleibende Verformung ein, die sich in der Reduzierung der ungespannten Länge äußert. Dieser Vorgang wird in der Federntechnik als "Setzen", bezeichnet, was mit den Eigenschaften "Kriechen" und "Relaxation" aus der Werkstofftechnik in Zusammenhang steht. Um diesem Setzvorgang entgegenzuwirken, werden die Druckfedern um den zu erwartenden Setzbetrag länger gewunden und anschließend in einer Setzoperation auf Blocklänge zusammengedrückt. Dieses Vorsetzen ermöglicht eine bessere Werkstoffauslastung und höhere Belastung.

Danach folgt in Transportrichtung eine Messstation 460, die im Beispielsfall als Längenmessstation ausgelegt ist, um die zwischen den axialen Enden der Schraubenfeder vorliegende Federlänge nach Abschluss der Wärmebehandlung und ggf. der Setzoperation zu messen. Alternativ oder zusätzlich können z.B. auch Durchmesserwerte gemessen werden. Die Messwerte werden mit entsprechenden Sollwerten verglichen, um festzustellen, ob die Feder ein innerhalb der Fertigungstoleranzen liegendes Gutteil (IO, in Ordnung) ist oder ein Schlechtteil (NIO, nicht in Ordnung), dessen Eigenschaften nicht der Spezifikation entsprechen.

In Umfangsrichtung folgen dann mehrere Ausschleusungsstationen, an denen eine Feder in Abhängigkeit von ihren festgestellten Eigenschaften aus der Nachfolgemaschine ausgeschleust wird. Die Schlechtteile (NIO) werden an der Ausschleusungsstation 470-1 aus der Federaufnahme entfernt und in einen Sammelbehälter NIO ausgeschleust. Somit gelangen nur Gutteile zu den nachfolgenden Ausschleusungsstationen. Die unmittelbar nachfolgende Ausschleusungsstation 470-2 dient einer sporadischen genaueren Qualitätskontrolle (Q, quality control). Hier werden nach vorgegebenem Prüfschema in kleineren oder größeren Abständen Schraubenfedern für eine genauere Qualitätskontrolle ausgeschleust. Diese landen dan im Sammelbehälter Q. Die folgende Ausschleusungsstation 470-3 dient der Ausschleusung derjenigen Schraubenfedern (Gutteile, IO), die für die Weiterbearbeitung oder Weiterverarbeitung vorgesehen sind, also für die weitere Produktion. Diese gelangen zur Nachfolgeanlage 500. Schließlich folgt noch eine Leerkontroll-Station 480, an der geprüft wird, ob die Federaufnahme, die als nächstes wieder zur Ladestation 430 vorgetaktet wird, wie erwartet leer ist oder, aufgrund einer Störung, noch eine Schraubenfeder (oder anderes Material) enthält, das eine Beladung in der nachfolgenden Ladestation 430 stören würde.

Diese Konfiguration ist nur beispielhaft dargestellt. Es können auch mehr oder weniger als vier Kühleinheiten in der Kühlstation vorhanden sein. Anstelle einer taktilen Längenmessung kann auch eine optische Messung der Länge an der Messstation vorgesehen sein. Alternativ oder zusätzlich können in einer Messstation andere Geometrieparameter einer Feder, beispielsweise ihr Durchmesser beziehungsweise der Durchmesserverlauf etc., erfasst werden. Es kann auch eine Messstation zur Messung der Federkraft vorgesehen sein.

Bei dem System 100 ist eine pneumatische Förderung von Schraubenfedern zwischen einzelnen Maschinen oder Stationen vorgesehen. Das pneumatische Fördersystem 300 weist hierzu unter anderem eine Rohrleitung 310 auf, die dafür vorgesehen ist, die von der Federwindemaschine 200 gefertigten und vom zugeführten Draht abgetrennten Schraubenfedern F im Takt der Fertigung sukzessive zur Ladestation 430 der Nachfolgemaschine 400 zu transportieren. Hierzu ist unter anderem eine Rohrleitung 310 mit einem mehrere Meter langen Kunststoffschlauch vorgesehen, der das Rohrleitungs-Hauptstück 311 bildet. Der Transport von weiterzuverarbeitenden Gutteilen von der Ausschleusungsstation 470-3 zur Nachfolgeanlage 500 wird ebenfalls pneumatisch über eine weitere Rohrleitung 315 realisiert. Schlechtteile werden von der Ausschleusungsstation 470-3 über eine Rohrleitung in einen Sammelbehälter NIO transportiert. Eine weitere Rohrleitung führt zur Einheit Q für die sporadisch durchzuführende Qualitätskontrolle. Sollten sich an der Leerstation 430 zur Leerkontrolle noch Materialien der Federaufnahme befinden, so wird dieses durch eine Rohrleitung zu einem entsprechenden Behälter L geleitet.

Um die Federn an der entsprechendes Arbeitsstation auszuschleusen, werden Rohrleitungen verwendet, die jeweils oberhalb der entsprechenden Arbeitsstationen mit nach unten gerichteter Einführöffnung münden. In den Tragering bzw. Abstützring 426 ist an jeder Arbeitsstation eine sternförmige Blasdüse 428 (siehe Detail in Fig. 5) mit einer Vielzahl radialer Schlitze eingearbeitet, so dass sich Federn unterschiedlicher Durchmesser darauf abstützen können und mittels eines von unten kommenden Druckluftstoßes nach oben in die zugeordnete Rohrleitung weggeblasen werden können.

Weitere Details des pneumatischen Fördersystems 300 werden nun zusätzlich anhand der Fig. 4 bis 7 erläutert. Diese Figuren zeigen jeweils Komponenten einer Bremseinrichtung.

An dem der Federwindemaschine 200 zugewandten Ende der Rohrleitung 310 ist die Federabsaugeinrichtung beziehungsweise Federeinsaugeinrichtung 320 angeordnet, die mit Druckluft einer Druckluftquelle 322 betrieben wird und im Betrieb die jeweils fertiggestellte und abgetrennte Feder F eintrittsseitig in das Fördersystem einsaugt. Die Konstruktion kann identisch oder ähnlich sein wie bei der Saugeinrichtung der eingangs erwähnten DE 24 17 685 A1. Die Einlassöffnung der Federansaugeinrichtung 320 ist gleichzeitig die Einlassöffnung bzw. Eintrittsöffnung der Rohrleitung 310 und so nah bei den Umformwerkzeugen angeordnet, dass sich das vordere Ende der sich entwickelnden Schraubenfeder bereits im Ansaugkanal der Federansaugeinrichtung befindet, bevor die Feder vom zugeführten Draht abgetrennt wird. Die abgetrennte Feder wird dann in Transportrichtung der Rohrleitung durch den Druckluftstrom beschleunigt und bewegt sich in dieser in Richtung Nachfolgemaschine 400. Um trotz Absaugeinrichtung eine kamerabasierte Regelung des Windeprozesses während der Federeinstellung zu gewährleisten, weist der Körper der Federabsaugdüse 320 ein Fenster 324 auf, durch welches hindurch die sich entwickelnde Feder von der Kamera 260 beobachtet werden kann.

Die Rohrleitung 310 kann mehrere Meter lang sein. Das Rohrleitungs-Hauptstück 311, welches sich eintrittsseitig an die Federansaugeinrichtung 320 anschließt, besteht im Beispielsfall aus einem Kunststoffschlauch aus Polytetrafluorethylen (PTFE) mit einer sehr glatten Rohrinnenseite, die dafür sorgt, dass auf dem weit überwiegenden Teil der Transportstrecke die Reibungskräfte zwischen Rohrinnenwand und Feder gering bleiben. Der Innendurchmesser der Rohrleitung ist geringfügig größer als der maximale Außendurchmesser der Schraubenfeder, wobei radial ausreichend Spiel für einen möglichst reibungsarmen Transport bleibt und auch eventuelle Krümmungsabschnitte des Rohrs ohne Beeinträchtigung der Transportfähigkeit durchlaufen werden können.

Am gegenüberliegenden Ende der Rohrleitung 310, also im Bereich der Ladestation 430 unmittelbar vor Eintritt in die Federaufnahme 420, sind Komponenten eines kollisionsgesicherten Federtransfersystems 305 angeordnet. Dieses ist so konstruiert, dass eine kontinuierliche bzw. unterbrechungsfreie Übergabe von Schraubenfedern von der Rohrleitung 310 durch eine Austrittsöffnung 375 der Rohrleitung hindurch in zugeordnete Federaufnahmen 420 erfolgen kann. Zusätzlich sorgt die Konstruktion der Komponenten automatisch dafür, dass Federn, die durch die Austrittsöffnung 375 in Richtung Federaufnahme hindurchgetretenen sind und die von dort eventuell zurück in die Rohrleitung springen wollen, daran gehindert werden, dies zu tun, indem der Rückweg durch die Austrittsöffnung hindurch blockiert wird.

Zu dem Federtransfersystem gehört eine Bremseinrichtung 350, die am Ende der Rohrleitung angeordnet ist und dort eine Bremsstrecke 352 definiert, um die ankommenden Schraubenfedern so stark abzubremsen, dass sie mit einer endlichen, aber nicht zu hohen Geschwindigkeit von vertikal oben in die in Ladeposition stehende Federaufnahme hineinbewegt werden können (vgl. Fig. 4 und 5). Die Bremsstrecke ist in Abschnitt der Rohrleitung. Die durch die Rohrleitung herangeführten Schraubenfedern haben beim Eintritt in die Bremsstrecke eine Eintrittsgeschwindigkeit v_{E}. Ihre Austrittsgeschwindigkeit v_{A} bei Austritt aus der Bremsstrecke ist gegenüber der Eintrittsgeschwindigkeit deutlich reduziert (d.h. v_{A} < v_{E}). Die Federn werden nicht zum Stillstand gebracht, sondern bleiben bis zur "Ankunft" in der Federaufnahme in Bewegung. Die Austrittsgeschwindigkeit kann z.B. nur noch 5% bis 50% der Eintrittsgeschwindigkeit betragen.

Die Bremseinrichtung 350 ist so ausgelegt, dass die sukzessive mit Abstand zueinander ankommenden Schraubenfedern ohne gegenseitige Berührung im Takt des Eintritts mit der Austrittsgeschwindigkeit durch eine Austrittsöffnung in Richtung der in Ladeposition befindlichen Federaufnahme abgegeben werden können. Dadurch kann erreicht werden, dass die Bewegungsenergie der Schraubenfedern gegen Ende der Abbremsphase noch ausreicht, um die Bremseinrichtung zuverlässig in Richtung Federaufnahme zu verlassen. Andererseits ist die Austrittsgeschwindigkeit jedoch so gering, dass eine in eine Federaufnahme eingefallene Schraubendruckfeder nicht nach Aufprall auf die Oberfläche 428 so stark zurückfedert, dass es zu einer Störung des taktweise sehr schnell ablaufenden Ladevorgangs kommen könnte. Zusätzlich ist eine selbsttätig arbeitende Blockierungseinrichtung (Komponente mit durchmesservariabler Austrittsöffnung 375) vorgesehen, die automatisch verhindert, dass Schraubenfedern nach Verlassen der Rohrleitung z.B. aufgrund Zurückfederns vom Boden der Federaufnahme, wieder von der Auslassseite zurück in die Rohrleitung geraten.

Eine besonders zuverlässig arbeitende Ausführungsform der Bremseinrichtung wird nun anhand der Fig. 4 bis 7 näher erläutert. An der Eintrittsseite hat die Bremseinrichtung 350 eine Federführungshülse 360, die an ihrer Eintrittsseite einen Innendurchmesser hat, der etwa dem Außendurchmesser des Rohrleitungs-Hauptstücks 311 entspricht und damit zur Herstellung einer luftdichten Verbindung auf dieses aufgeschoben und dort befestigt werden kann. An diesen erweiterten Abschnitt schließt sich ein Trichterabschnitt 362 an, der sich nach unten hin konisch verjüngt und in einen zylindrischen Führungskanal 365 übergeht, dessen Innendurchmesser nur wenige Zehntelmillimeter größer als der größte Außendurchmesser der zu führenden Schraubenfedern ist. Die Federführungshülse 360 ist ein werkstückangepasstes Wechselteil. Die axiale Länge des Führungskanals 365 ist mehrfach größer als sein Innendurchmesser, so dass sich ein relativ langer erster Bremsstreckenabschnitt bildet, in welchem die Schraubenfeder beruhigt und aufgrund Gleitreibung an den Innenwänden vor allem des zylindrischen Führungsabschnitts bereits von der Eintrittsgeschwindigkeit auf eine geringe Geschwindigkeit abgebremst wird.

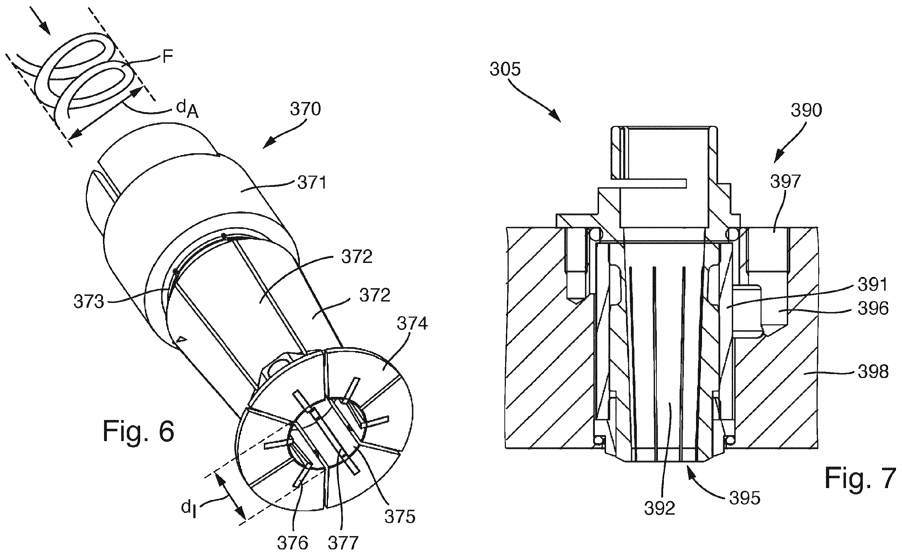

Nach unten, also in Richtung Federaufnahme, schließt sich eine selbsttätig schließende Zuführdüse 370 an, die in Fig. 4 und Fig. 5 im Längsschnitt und in Fig. 6 in isometrischer Ansicht gezeigt ist. Die Zuführdüse, die auch als Austrittsdüse bezeichnet werden kann, ist auf das untere Ende der Führungshülse aufgesteckt und dort so befestigt, dass eine vorzugsweise in Radialrichtung luftdichte Verbindung besteht. Die Zuführdüse 370 hat einen eintrittsseitigen hülsenförmigen Basisabschnitt 371, der am unteren Ende der Führungshülse durch Aufstecken auf das untere Ende der Federführungshülse befestigt wird. Der Basisabschnitt trägt an der Austrittsseite eine ringförmige Anordnung von z.B. sechs identisch gestalteten, elastisch beweglichen Fingern 372, die gemeinsam an der Austrittsseite der Zuführdüse eine im Wesentlichen ringförmige Austrittsöffnung 375 umschließen, die gleichzeitig die Austrittsöffnung der Rohrleitung 310 des pneumatischen Fördersystems 310 ist. An den Enden der Finger ragen radial nach außen ringsegmentförmige Abdeckabschnitte 374 ab. In Fig. 4 ist unmittelbar vor der Austrittsöffnung ein Sensor 379 in Form eines Näherungsschalters zu sehen, der ein Signal abgibt, wenn eine Feder die Austrittsöffnung passiert hat. Die Signale können zur Regelung der Federbeschleunigung anhand der optimalen Federgeschwindigkeit genutzt werden. Bei Nutzung des Austrittssensors 397 zur Erfassung eines Austritts einer Schraubenfeder aus der Austrittsöffnung ist dem Betriebssteuerungssystem jederzeit bekannt, wann eine Schraubenfeder vom Fördersystem in Richtung Federaufnahme austritt und wie viele Federn absolut und pro Zeiteinheit austreten.

Die Austrittsöffnung 375 ist im Durchmesser variabel, sie fungiert einerseits als Teil der Bremseinrichtung 350, andererseits als Blockierungseinrichtung 375, die gegen in die Rohrleitung zurückspringende Federn schützt.

Im System 100 wird die interne Transporteinheit 410 der Nachfolgemaschine 400 in Abhängigkeit von Sensorsignalen des Austrittssensors derart gesteuert, dass die interne Transporteinheit kurzzeitig stillgesetzt wird, wenn ein Austritt einer Schraubenfeder detektiert wird. Dadurch können unerwünschte Kollisionssituationen vermieden werden, die zur Deformation von Schraubenfedern und/oder zu Schäden an den Einrichtungen der Maschine führen könnten.

Die freien Endabschnitte der Finger 372 bilden gemeinsam einen durchmesservariablen Abschnitt der Zuführdüse. Im unbelasteten Grundzustand, also wenn keine Schraubenfeder hindurchtritt, ist der Innendurchmesser d_{I} der Austrittsöffnung 375 einige Prozent (z.B. zwischen 5% und 20%) kleiner als der (maximale) Außendurchmesser der geförderten Schraubenfedern. Die Austrittsöffnung kann jedoch durch eine hindurchtretende Schraubenfeder auf einen größeren Durchlassquerschnitt elastisch aufgeweitet werden. Die elastische Nachgiebigkeit der freien Endabschnitte der Finger in Radialrichtung wird bei dieser Konstruktion im Wesentlichen dadurch erreicht, dass zwischen dem Basisabschnitt 371 und den relativ verwindungssteifen Abschnitten der Finger 372 jeweils ein federelastischer Filmscharnierabschnitt 373 gebildet ist, der es ermöglicht, dass die Finger in Radialrichtung nach außen schwenken und in Abwesenheit von Belastung ihre innen liegende Grundstellung einnehmen.

Die Zuführdüse 370 ist im Beispielsfall ein einstückiges Bauteil, das mittels 3D-Druck aus thermoplastischem Kunststoff hergestellt ist. Die Herstellung mittels 3D-Druck erlaubt schnelle und genaueste Anpassungen der elastischen Eigenschaften der Finger an die geometrischen und kinetischen Eigenschaften der zu fördernden Feder.

Der durch die Zuführdüse führende Durchlasskanal hat eintrittsseitig etwa den Innendurchmesser des zylindrischen Zuführkanals 365 der vorgeschalteten Federführungshülse. Der Durchmesser verringert sich dann stetig in Richtung Austrittsöffnung 375, so dass sich für eine in Richtung Austrittsöffnung 375 bewegende Feder ein zunehmend größerer Bewegungswiderstand ergibt, der daraus resultiert, dass die Haftreibung zwischen den Innenseiten der elastischen Fingern und der Federaußenseite größer wird, je weiter sich die Feder der Austrittsöffnung annähert. Um trotz der Verwendung eines Kunststoffwerkstoffs eine lange Lebensdauer der reibungsbelasteten Teile der Zuführdüse zu gewährleisten, sind im Bereich der Endabschnitte der elastischen Finger 372 jeweils flache Verschleißschutzelemente 376 aus gehärtetem Stahl eingelassen, die an den Innenseiten der Endabschnitte der Finger jeweils in Axialrichtung verlaufende verschleißfeste Führungsflächen 377 bilden. Die Verschleißschutzelemente stehen nach innen etwas über die Innenseite der Fingerenden hinaus, so dass die Fingerenden nicht direkt in Reibungskontakt mit der Schraubenfeder treten.

Die Bremseinrichtung 350 ist eine passive Funktionseinheit, kommt also für ihre Funktionen ohne gesonderte Antriebe aus. Mithilfe der Bremseinrichtung 350 ist eine zweistufige Abbremsung der herankommenden Schraubenfedern gewährleistet. Im relativ langen zylindrischen Führungskanal 365 der Führungshülse findet hauptsächlich eine Beruhigung und nur in geringem Ausmaß eine Abbremsung durch Reibung statt. Der Hauptanteil der Bremswirkung wird durch die selbsttätig schließende Austrittsdüse 370 bewirkt.

Da der Durchmesser der Austrittsöffnung 375 nach Durchtritt der Schraubenfeder und Zurückschnellen der elastischen Finger kleiner ist als der Außendurchmesser der hindurchgetretenen Feder, wird durch die Zuführdüse 370 bzw. Austrittsdüse 370 gleichzeitig ein eventuelles Zurückspringen der durchgelassenen Feder zurück in den Zufuhrkanal blockiert. Die Austrittsdüse bzw. die Austrittsöffnung fungiert somit auch als Blockierungseinrichtung, die das Wieder-Eindringen der Federn nach Verlassen der Austrittsdüse mit rein mechanischen Mittel verhindert. Dies ist ein wesentlicher Beitrag für einen störungsfreien Betrieb des Fertigungssystems auch bei hohen Taktzahlen.

Es können weitere bremswirksame Elemente vorgesehen sein. Die Schnittdarstellung in Fig. 5 zeigt ein Ausführungsbeispiel, bei dem zur Bremseinrichtung eine magnetische Bremseinheit 380 mit wenigstens einem Magneten 382 gehört. Die Komponenten der magnetischen Bremseinheit sind auf Seiten der Nachfolgemaschine 400 an deren Ladestation 430 so montiert, dass die Magneten sich in unmittelbarer Nähe der Außenseite einer Federaufnahme 430 befinden, wenn diese sich in der Ladeposition befindet. Dadurch kann eine in die Federaufnahme eingeführte Schraubenfeder mithilfe magnetischer Kräfte abgebremst und in der Federaufnahme gehalten werden. Je nach Art der Feder kann ein einziger Bremsmagnet ausreichen. Im Beispielsfall sind drei übereinander angeordnete Permanentmagnete vorgesehen, so dass die wirksame Länge der magnetischen Bremseinheit 380 mehr als der Hälfte der Länge der Federaufnahme 430 zwischen ihren axialen Enden entspricht.

Durch die Haltefunktion der Magnete werden die Schraubenfedern mit Magnetkraft daran gehindert, sich um größere Strecken zurück in Richtung Austrittsöffnung zu bewegen, so das insoweit der Wiedereintritt von Federn von der Austrittsseite in die Rohrleitung hinein verhindert wird.

Die magnetische Bremseinheit hat nicht nur Bremswirkung und Haltewirkung auf ursprünglich magnetisierbare Materialien, wie beispielsweise viele Federdrähte. Sie kann vielmehr auch wirksam bei der Verarbeitung von Schraubenfedern aus rostfreiem Stahl eingesetzt werden, z.B. also bei Federn aus austenitischem korrosionsbeständigen Stahl. Dieses Material hat bekanntlich eine sehr geringe Magnetisierbarkeit und ist im Herstellungszustand praktisch unmagnetisch. Es wurde jedoch festgestellt, dass das Material beim Kaltumformen durch Federwinden magnetisierbar wird. Dies kann durch Verwendung einer magnetischen Bremseinheit mit Vorteil im Sinne einer zuverlässigen Abbremsung und Sicherung gegen Herausspringen aus der Federaufnahme genutzt werden.

Die oben beschriebene selbsttätig schließende Zuführdüse 370 ist ein passives Bauelement, dessen Funktionen (Abbremsung durch Reibung, Blockieren gegen Wiedereintritt einer rückfedernden Schraubenfeder) z.T. durch die hindurchtretenden Schraubenfedern selbst betätigt werden. Es gibt auch Ausführungsbeispiele von Zuführdüsen mit einer Zwangssteuerung, also von extern schaltbare Varianten. Fig. 7 zeigt hierzu ein Beispiel einer Zuführdüse 390, die extern pneumatisch angesteuert werden kann, um den Durchlassquerschnitt sofort zu verringern, sobald eine Schraubenfeder vollständig durch die Düse in Richtung Federaufnahme ausgetreten ist. Dazu ist in der Düsenhalterung 398 ein Ringkanal 396 gebildet, der über einen Luftanschluss 397 an eine Druckluftquelle angeschlossen werden kann. Ähnlich wie das Beispiel der Fig. 6 hat die Zuführdüse einen hülsenförmig geschlossenen Basisabschnitt und daran angebrachte elastische Finger bzw. Lamellen 392, deren freie Enden die Austrittsöffnung 395 umschließen. In Abwesenheit äußerer Kräfte hat diese Austrittsöffnung 395 einen Durchlassquerschnitt, der geringfügig größer als der Maximalaußendurchmesser der Schraubenfehler ist, sodass diese hindurch passt, ohne die Finger nach außen zu verdrängen. Somit wird allenfalls eine geringe oder keine Bremswirkung erzeugt. Bei der extern schaltbaren Variante kann die Transportgeschwindigkeit der Federn geringer sein als bei der oben beschriebenen selbstschließenden Austrittsdüse, da sich die Federn nicht selbst durch die Düse hindurch "drücken" müssen.

Eine elastische Hülse 391 umschließt die Abschnitte unterhalb des Basisabschnitts inklusive der Folienscharniere und der darunter folgenden Lamellen bzw. Finger. Die Zuführhülse ist im unbelasteten Zustand so weit geöffnet, dass die Feder hindurchfliegen kann. Ist die Feder hindurchgeflogen, wird die elastische Hülse 391 mit Druckluft beaufschlagt. Der Druck im Ringspalt 396 bewirkt, dass die elastische Hülse 391 radial zusammengedrückt wird. Dadurch werden die Finger 392 der Düse so weit zusammengedrückt, dass eine zurückspringende Feder nicht mehr durch die Austrittsöffnung 395 in die Düse eindringen kann. Für den nächsten Zyklus wird der Luftdruck abgeschaltet, so dass die elastische Hülse und die Finger der Düse wieder ihre ursprüngliche Form annehmen können.

Das System 100 (Fertigungssystem 100) ist mit einem Betriebssteuerungssystem ausgestaltet, das eine Vielzahl von Sensoren zur Überwachung der Fertigung und zur Regelung von Fertigungsparametern in Abhängigkeit von Sensorsignalen umfasst. Zu den Sensoren gehören im Beispielsfall: ein Federdurchtrittssensor S1 im Anfangsbereich der Rohrleitung 310 in der Nähe der Federwindemaschine 200; ein Federdurchtrittssensor S2-1 im Endbereich der Rohrleitung 310 vor Beginn der Bremsstrecke. Ein weiterer Federdurchtrittssensor S2-2 in der Nähe von Sensor S2-1 ebenfalls vor Eintritt in die Bremseinrichtung 350. Sensoren S3, S4 und S5 an der Rohrleitung 315, die von der Ausschleusungsstation 470-3 für Gutteile zur Nachfolgeanlage 500 führt. Ein Sensor S6, der die Ausschleusung von Schlechtteilen einer entsprechenden Ausschleusungsstation 470-1 detektiert. Ein Sensor S7, der die Ausschleusung von Schraubenfedern kontrolliert, die der Qualitätskontrolle (Q) zugeleitet werden. Ein Sensor S8 zum Zählen eventueller Schraubenfedern, die erst an der Leerkontrolle ausgeschleust werden.

Weiterhin sind mehrere Düsen vorgesehen, über die Druckluft an unterschiedlichen Stellen in die Rohrleitungen eingespeist werden kann. Eine Düse D1 ist im Bereich der Federabsaugvorrichtung 320 vorgesehen, diese bewirkt die ursprüngliche Beschleunigung der abgetrennten Schraubenfedern F in die Rohrleitung 310 hinein. Da die Rohrleitung relativ lang sein kann, können zwischen Federmaschine und der Austrittsöffnung 375 an der Nachfolgemaschine 400 eine oder mehrere Zwischenbeschleunigungsdüsen sinnvoll sein, eine Zwischendüse D2 ist schematisch dargestellt. Auch in der weiteren Rohrleitung 315, die der Nachfolgemaschine 400 nachgeschaltet ist, kann eine Zwischenbeschleunigungsdüse D3 (oder mehrere Zwischenbeschleunigungsdüsen) vorgesehen sein.

Während des Betriebs werden die Sensorsignale der Sensoren S1 und S2-1 am Anfang und am Ende der Rohrleitung 310 für eine Flugzeitüberwachung genutzt. Liegt diese außerhalb eines zulässigen Flugzeitbereiches oder entwickelt sie sich aus einem noch akzeptablen Bereich vorhersehbar in einen kritischen Bereich, beispielsweise nach längerem Betrieb aufgrund von zunehmender Verschmutzung im Rohrinneren, so kann beispielsweise der Volumenstrom der Druckluft an der Einsaugdüse D1 in der Ansaugeinrichtung 320 erhöht werden, um eine Flugzeit in spezifiziertem Bereich sicherzustellen.

Die Sensoren S3, S4 und S5 in der weiteren Rohrleitung können zur Flugzeitüberwachung genutzt werden. Die Signale können analog zur Steuerung der Zwischendüse D3 verarbeitet werden, um sicherzustellen, dass die geförderten Schraubenfedern im gewünschten Takt ihrer Herstellung an der Nachfolgeanlage 500 ankommen.

Mithilfe der nahe beieinander liegenden Sensoren S2.1 und S2.2 kann die Eintrittsgeschwindigkeit der Schraubenfedern beim Eintritt in die unmittelbar folgende Bremseinrichtung 350 ermittelt werden. Im Beispielsfall wird in Reaktion auf Sollwertabweichungen außerhalb des spezifizierten Bereichs ein Proportionalventil betätigt, welches die Zufuhr von Druckluft an der Zwischendüse D2 steuert.

Mithilfe der Sensoren S6, S7 und S8 im Zusammenwirken mit S5 kann eine 100%ige Überwachung des Verbleibs der Federn durchgeführt werden.

## Patentansprüche

1. Verfahren zur Herstellung von Schraubenfedern aus Draht, worin Draht von einem Drahtvorrat zu einer numerisch gesteuerten Federwindemaschine gefördert wird, Abschnitte des Drahts in der Federwindemaschine sukzessive in einer Umformoperation zu Schraubenfedern umgeformt werden, jede Schraubenfeder nach der Umformoperation vom zugeführten Draht abgetrennt wird und abgetrennte Schraubenfedern danach sukzessive durch eine Rohrleitung eines pneumatischen Fördersystems hindurch in eine Federaufnahme einer Nachfolgemaschine transportiert werden,
**gekennzeichnet durch**:
einen kollisionsgesicherten Federtransfer, der eine kontinuierliche Übergabe von Schraubenfedern von der Rohrleitung durch eine Austrittsöffnung der Rohrleitung hindurch in zugeordnete Federaufnahmen und eine automatische Verhinderung eines Wiedereintritts von durch die Austrittsöffnung in Richtung Federaufnahme hindurchgetretenen und vom Bereich der Federaufnahme zurückspringenden Schraubenfedern zurück in die Rohrleitung umfasst, wobei die Schraubenfedern bei der kontinuierlichen Übergabe auf dem Weg durch die Rohrleitung bis zur Austrittsöffnung und danach bis zur Federaufnahme an keiner Stelle bis zum Stillstand abgestoppt werden und
der kollisionsgesicherte Federtransfer ein automatisches Blockieren der Rohrleitung gegen Wiedereintritt einer vom Bereich der Federaufnahme zurückspringenden Schraubenfeder nach Durchtritt durch die Austrittsöffnung umfasst.

2. Verfahren nach Anspruch 1, **dadurch gekennzeichnet, dass** der kollisionsgesicherte Federtransfer weiterhin folgenden Schritt umfasst:
(i) Abbremsen der sukzessive transportierten Schraubenfedern im Bereich einer am Ende der Rohrleitung angeordneten Bremseinrichtung über eine Bremsstrecke von einer Eintrittsgeschwindigkeit bei Eintritt in die Bremsstecke auf eine gegenüber der Eintrittsgeschwindigkeit reduzierte endliche Austrittsgeschwindigkeit bei Austritt aus der Bremsstrecke derart, dass die Schraubenfedern ohne gegenseitige Berührung im Takt des Eintritts mit der Austrittsgeschwindigkeit durch eine Austrittsöffnung in Richtung Federaufnahme abgegeben werden;

3. Verfahren nach Anspruch 1 oder 2, **gekennzeichnet durch** eine temporäre Änderung des Durchmessers der Austrittsöffnung zwischen einem ersten Durchmesser, der kleiner als der Maximaldurchmesser der Schraubenfeder ist, und einem zweiten Durchmesser, der ein Hindurchtreten der Schraubenfeder durch die Austrittsöffnung erlaubt und/oder dadurch dass beim Abbremsen die Schraubenfedern in mehreren, insbesondere zwei aufeinanderfolgenden Bremsstufen mit unterschiedlicher Bremswirkung abgebremst werden, wobei vorzugsweise eine Bremsstufe eine Reibungsbremsstufe in einem durchmesserangepassten Führungskanal und eine nachfolgende Bremsstufe ein Hindurchzwängen durch eine elastisch aufweitbare Austrittsöffnung mit Unterdurchmesser umfasst und/oder wobei in einer Bremsstufe eine in eine Federaufnahme eingeführte Schraubenfeder mittels magnetischer Kräfte abgebremst und in der Federaufnahme gehalten wird.

4. Verfahren nach einem der Ansprüche 2 bis 3, **gekennzeichnet durch** eine Regelung der Eintrittsgeschwindigkeit auf ein Wert innerhalb eines Spezifikationsbereichs durch Erfassen einer Ist-Geschwindigkeit der Schraubenfedern im Bereich einer Messstrecke zwischen der Federwindemaschine und der Bremseinrichtung; Vergleichen der Ist-Geschwindigkeit mit einer Soll-Geschwindigkeit zur Ermittlung einer Geschwindigkeitsabweichung; Verändern einer Förderleistung in der Rohrleitung in Abhängigkeit von der Geschwindigkeitsabweichung.

5. Verfahren nach einem der vorhergehenden Ansprüche, **dadurch gekennzeichnet, dass** die Nachfolgemaschine mehrere Arbeitsstationen und eine interne Transporteinheit mit einer Vielzahl von Federaufnahmen zum Transportieren von Schraubenfedern zu den Arbeitsstationen aufweist, wobei eine Steuerung der Transporteinheit in Abhängigkeit von der Anlieferung von Schraubenfedern vorgesehen ist.

6. System (100) zur Herstellung von Schraubenfedern (F) aus Draht (D), umfassend:
eine Federwindemaschine (200) mit einer Einzugseinrichtung (210) zum Fördern von Draht (D) zu einer Umformeinrichtung (220), die Umformwerkzeuge zum Umformen des Drahts in eine Schraubenfeder aufweist, sowie mit einer Schnitteinrichtung zum Abtrennen einer Schraubenfeder (F) von dem zugeführten Draht nach Abschluss der Umformoperation;
wenigstens eine Nachfolgemaschine (400), die mindestens eine Federaufnahme (420) zur Aufnahme einer einzelnen Schraubenfeder aufweist;
ein pneumatisches Fördersystem (300) mit einer Rohrleitung (310) zum sukzessiven Transportieren abgetrennter Schraubenfedern von der Federwindemaschine (200) zu der Nachfolgemaschine (400), wobei hinter einer Einlassöffnung der Rohrleitung eine Einspeisungseinrichtung (320) für Druckfluid zum Beschleunigen der Schraubenfedern in Transportrichtung und an einer Austrittsseite der Rohrleitung eine Austrittsöffnung (375, 395) zur Abgabe der Schraubenfedern in zugeordnete Federaufnahmen (420) angeordnet ist,
**gekennzeichnet durch**
ein kollisionsgesichertes Federtransfersystem (305), das für eine kontinuierliche Übergabe von Schraubenfedern von der Rohrleitung (310) durch eine Austrittsöffnung (375, 395) der Rohrleitung hindurch in zugeordnete Federaufnahmen (420) und eine automatische Verhinderung eines Wiedereintritts von durch die Austrittsöffnung in Richtung Federaufnahme hindurchgetretenen und vom Bereich der Federaufnahme zurückspringenden Schraubenfedern zurück in die Rohrleitung (310) ausgebildet ist, wobei
die Schraubenfedern bei der kontinuierlichen Übergabe auf dem Weg durch die Rohrleitung bis zur Austrittsöffnung und danach bis zur Federaufnahme an keiner Stelle bis zum Stillstand abgestoppt werden und
das Federtransfersystem (305) eine Blockierungseinrichtung (370) zum automatischen Blockieren der Rohrleitung (310) gegen Wiedereintritt einer vom Bereich der Federaufnahme (429) zurückspringenden Schraubenfeder nach Durchtritt durch die Austrittsöffnung (375) umfasst.

7. System nach Anspruch 6, **dadurch gekennzeichnet, dass** das Federtransfersystem (305) weiterhin eine Bremseinrichtung (350) aufweist, die am Ende der Rohrleitung (310) eine Bremsstrecke (352) definiert und dazu konfiguriert ist, sukzessive eintreffende Schraubenfedern innerhalb der Bremsstrecke von einer Eintrittsgeschwindigkeit bei Eintritt in die Bremsstecke (352) auf eine gegenüber der Eintrittsgeschwindigkeit reduzierte endliche Austrittsgeschwindigkeit bei Austritt aus der Bremsstrecke (352) derart abzubremsen, dass die Schraubenfedern ohne gegenseitige Berührung im Takt des Eintritts mit der Austrittsgeschwindigkeit durch eine Austrittsöffnung in Richtung Federaufnahme abgegeben werden.

8. System nach Anspruch 6 oder 7, **dadurch gekennzeichnet, dass** die Austrittsöffnung (375, 395) des Federtransfersystems (305) als durchmesservariable Austrittsöffnung (375, 395) ausgebildet ist, die eine temporäre Änderung des Durchmessers der Austrittsöffnung zwischen einem ersten Durchmesser und einem zweiten Durchmesser erlaubt, wobei der erste Durchmesser kleiner als der Maximaldurchmesser der Schraubenfeder ist und der zweite Durchmesser ein Hindurchtreten der Schraubenfeder durch die Austrittsöffnung erlaubt, wobei vorzugsweise die Bremseinrichtung (350) eine selbsttätig schließende Zuführdüse (370) aufweist, die einen Düsenkörper mit einem durchmesservariablen Abschnitt aufweist, der einen Innendurchmesser (d_{I}) aufweist, der in einem lastfreien Grundzustand kleiner als der Außendurchmesser (d_{A}) der Schraubenfeder (F) ist und durch eine hindurchtretende Schraubenfeder elastisch auf einen Durchlassquerschnitt erweiterbar ist, wobei der durchmesservariable Abschnitt vorzugsweise die Austrittsöffnung (375) bildet.

9. System nach Anspruch 8, **dadurch gekennzeichnet, dass** die Zuführdüse (370) einen eintrittsseitigen hülsenförmigen Basisabschnitt (371) und eine ringförmige Anordnung mit mehreren Fingern (372) aufweist, die mit dem Basisabschnitt über federelastische Filmscharnierabschnitte (373) radial verschwenkbar verbunden sind, wobei freie Enden der Finger die Austrittsöffnung (375) umschließen und/oder dass die Zuführdüse (370) aus Kunststoff gefertigt ist, insbesondere mittels 3D-Drucks, wobei vorzugsweise an den freien Enden der Finger Verschleißschutzeinsätze (376) aus einem verschleißfesten Material, insbesondere gehärtetem Stahl, eingesetzt sind.

10. System nach einem der Ansprüche 7 bis 8, **dadurch gekennzeichnet, dass** die Bremseinrichtung (350) eine federspezifisch angepasste Federführungshülse (360) mit einem zylindrischen Führungskanal (365) aufweist, der einen Innendurchmesser aufweist, der an den Außendurchmesser der Schraubenfedern derart angepasst ist, dass die Schraubenfedern im Wesentlichen spielfrei durch den Führungskanal hindurchpassen, wobei die Federführungshülse vorzugsweise an einer Eintrittsseite des Führungskanals einen sich zur Eintrittsseite konisch erweiternden Einführabschnitt aufweist, der vorzugsweise in einen zylindrischen Aufsteckabschnitt übergeht, dessen Innendurchmesser im Wesentlichen dem Außendurchmesser eines vorgeschalteten Abschnitts der Rohrleitung (310) entspricht, wobei vorzugsweise die Federführungshülse (360) zwischen einem Rohrleitungs-Hauptstück (311) und einer Zuführdüse (370) angeordnet ist.

11. System nach einem der Ansprüche 6 bis 10, **dadurch gekennzeichnet, dass** das Federtransfersystem, insbesondere die Bremseinrichtung (350), eine magnetische Bremseinheit (380) mit wenigstens einem Magneten (382) aufweist, der einer Federaufnahme (420) zugeordnet und dafür konfiguriert ist, eine in die Federaufnahme eingeführte Schraubenfeder mittels magnetischer Kräfte abzubremsen und in der Federaufnahme zu halten.

12. System nach einem der Ansprüche 7 bis 11, **dadurch gekennzeichnet, dass** die Blockierungseinrichtung mindestens ein Verriegelungselement aufweist, das in Reaktion auf Steuersignale mithilfe eines Antriebs aus einer zurückgezogenen Neutralstellung oder Neutralkonfiguration automatisch in eine Blockierungsstellung oder Blockierungskonfiguration überführbar ist, um den Rückweg zu blockieren.

13. System nach einem der Ansprüche 6 bis 12, **dadurch gekennzeichnet, dass** die Nachfolgemaschine (400) mehrere Arbeitsstationen und eine interne Transporteinheit (410) zum Transportieren von Schraubenfedern entlang einer Transportstrecke zu den Arbeitsstationen aufweist, wobei die Transporteinheit (410) mittels eines Drehantriebs um eine Drehachse (412)) drehbar ist und eine Vielzahl von Federaufnahmen (420) aufweist, die in Form eines Ringes um die Drehachse (412) herum angeordnet und zur Aufnahme jeweils einer einzelnen Schraubenfeder ausgebildet sind, wobei eine der Arbeitsstationen eine Ladestation (430) ist und die Rohrleitung derart zu der Ladestation führt, dass ein die Austrittsöffnung (375) enthaltender Endabschnitt der Rohrleitung koaxial zu einer in der Ladeposition positionierten Federaufnahme angeordnet ist, wobei vorzugsweise die Nachfolgemaschine (400) eine Wärmebehandlungseinheit aufweist, die eine der Ladestation (430) nachgeschaltete Erwärmungsstation (440) und vorzugsweise eine der Erwärmungsstation (440) nachgeschaltete Kühlstation (450) umfasst, die vorzugsweise zwei, drei, vier oder mehr aufeinander folgende Kühleinheiten umfasst.

14. System nach Anspruch 13, **dadurch gekennzeichnet, dass** zusätzlich entlang der Transportstrecke mindestens eine der folgenden Arbeitsstationen vorgesehen ist:
eine der Wärmebehandlungseinheit nachgeschaltete Setzstation (455);
eine der Wärmebehandlungseinheit und/oder der Setzstation nachgeschaltete Messstation (460);
eine einer Messtation (460) nachgeschaltete Ausschleusungsstation (470-1) für Schlechtteile,
eine einer Messstation (460) nachgeschaltete Ausschleusungsstation (470-2) zu einer Qualitätskontrolleinheit;
eine einer Messstation (460) nachgeschaltete Ausschleusungsstation (470-3) für Gutteile;
eine Leerkontrollstation (480).

15. System nach einem der Ansprüche 6 bis 14, **gekennzeichnet durch** ein Betriebssteuerungssystem mit einer Vielzahl von Sensoren (S1 - S8) zur Überwachung der Fertigung und zur Regelung von Fertigungsparametern in Abhängigkeit von Sensorsignalen, wobei das Betriebssteuerungssystem eine oder mehrere der folgenden Funktionsgruppen umfasst:
zwei mit Abstand zueinander an unterschiedlichen Positionen der Rohrleitung (310) angeordnete Federdurchtrittssensoren (S1, S2.1, S2.2), wobei Sensorsignale der Federdurchtrittssensoren für eine Flugzeiterfassung und/oder zur Ermittlung der Eintrittsgeschwindigkeit der Schraubenfedern in eine Bremsstrecke (352) verarbeitet werden, wobei vorzugsweise eine Förderleistung des Fördersystems in Abhängigkeit von der Eintrittsgeschwindigkeit geregelt wird;
einen Austrittssensor (379) zur Erfassung eines Austritts einer Schraubenfeder aus der Austrittsöffnung, wobei vorzugsweise eine interne Transporteinheit (410) der Nachfolgemaschine (400) in Abhängigkeit von Sensorsignalen des Austrittssensors derart steuerbar ist, dass die interne Transporteinheit bei Austritt einer Schraubenfeder stillgesetzt wird;
einen Gutteilesensor (S3) zur Erfassung der Anzahl ausgeschleuster Gutteile;
einen Schlechtteilesensor (S6) zur Erfassung der Anzahl ausgeschleuster Schlechtteile einen Qualitätskontrollsensor (S7) zur Erfassung der Anzahl zur Qualitätskontrolle ausgeschleuster Schraubenfedern
einen Leerkontrollsensor (S8).

## Claims

1. Method for producing coil springs made of wire, wherein wire is conveyed from a wire reserve to a numerically controlled spring coiling machine, portions of the wire in the spring coiling machine are successively formed into coil springs in a forming operation, each coil spring is severed from the supplied wire after the forming operation, and severed coil springs are then successively transported through a pipe of a pneumatic conveyor system into a spring receptacle of a downstream machine,
**characterized by**:
a collision-proof spring transfer, which comprises continuous transfer of coil springs from the pipe through an exit opening of the pipe into assigned spring receptacles and automatic prevention of any re-entry of coil springs that have passed through the exit opening in the direction of the spring receptacle and rebound from the region of the spring receptacle back into the pipe, wherein the coil springs are not stopped at any point on the way through the pipe to the exit opening and then to the spring receptacle during the continuous transfer until they come to a standstill, and
the collision-proof spring transfer comprises automatic blocking of the pipe against re-entry of a coil spring rebounding from the region of the spring receptacle after it has passed through the exit opening.

2. Method according to Claim 1, **characterized in that** the collision-proof spring transfer further comprises the following step:
(i) decelerating the successively transported coil springs in the region of a braking device arranged at the end of the pipe over a braking section from an entry speed when they enter the braking section to a finite exit speed, which is reduced compared to the entry speed, when they exit the braking section in such a way that the coil springs are dispensed through an exit opening in the direction of the spring receptacle at the exit speed at the rate of entry without mutual contact.

3. Method according to Claim 1 or 2, **characterized by** a temporary change in the diameter of the exit opening between a first diameter, which is smaller than the maximum diameter of the coil spring, and a second diameter, which allows the coil spring to pass through the exit opening, and/or in that, during deceleration, the coil springs are decelerated in multiple, in particular two, consecutive braking stages with different braking actions, wherein preferably one braking stage comprises a friction braking stage in a diameter-adapted guide duct and a subsequent braking stage comprises squeezing through an elastically expandable exit opening with a diameter deficit, and/or wherein in one braking stage a coil spring introduced into a spring receptacle is decelerated by means of magnetic forces and held in the spring receptacle.

4. Method according to either of Claims 2 to 3, **characterized by** feedback control of the entry speed to a value within a specification range by detecting an actual speed of the coil springs in the region of a measuring section between the spring coiling machine and the braking device; comparing the actual speed with a target speed to determine a speed variance; varying a conveying output in the pipe on the basis of the speed variance.

5. Method according to one of the preceding claims, **characterized in that** the downstream machine has multiple workstations and an internal transport unit having a multiplicity of spring receptacles for transporting coil springs to the workstations, wherein there is provision for control of the transport unit on the basis of the delivery of coil springs.

6. System (100) for producing coil springs (F) from wire (D), comprising:
a spring coiling machine (200) having an intake device (210) for conveying wire (D) to a forming device (220) which has forming tools for forming the wire into a coil spring, and having a cutting device for severing a coil spring (F) from the supplied wire after the completion of the forming operation;
at least one downstream machine (400) which has at least one spring receptacle (420) for receiving a single coil spring;
a pneumatic conveyor system (300) having a pipe (310) for successively transporting severed coil springs from the spring coiling machine (200) to the downstream machine (400), wherein a feeding device (320) for pressurized fluid for accelerating the coil springs in the transport direction is arranged behind an entry opening of the pipe, and an exit opening (375, 395) for dispensing the coil springs into assigned spring receptacles (420) is arranged on an exit side of the pipe,
**characterized by**
a collision-proof spring transfer system (305) which is designed to continuously transfer coil springs from the pipe (310) through an exit opening (375, 395) of the pipe into assigned spring receptacles (420) and to automatically prevent any re-entry of coil springs that have passed through the exit opening in the direction of the spring receptacle and rebound from the region of the spring receptacle back into the pipe (310), wherein
the coil springs are not stopped at any point on the way through the pipe to the exit opening and then to the spring receptacle during the continuous transfer until they come to a standstill, and
the spring transfer system (305) comprises a blocking device (370) for automatically blocking the pipe (310) against re-entry of a coil spring rebounding from the region of the spring receptacle (429) after it has passed through the exit opening (375).

7. System according to Claim 6, **characterized in that** the spring transfer system (305) further comprises a braking device (350) which defines a braking section (352) at the end of the pipe (310) and is configured to decelerate successively incoming coil springs within the braking section from an entry speed when they enter the braking section (352) to a finite exit speed, which is reduced compared to the entry speed, when they exit the braking section (352) in such a way that the coil springs are dispensed through an exit opening in the direction of the spring receptacle at the exit speed at the rate of entry without mutual contact.

8. System according to Claim 6 or 7, **characterized in that** the exit opening (375, 395) of the spring transfer system (305) is in the form of a variable-diameter exit opening (375, 395) which allows a temporary change in the diameter of the exit opening between a first diameter and a second diameter, wherein the first diameter is smaller than the maximum diameter of the coil spring and the second diameter allows the coil spring to pass through the exit opening, wherein the braking device (350) preferably has an automatically closing supply nozzle (370) which has a nozzle body with a variable-diameter portion that has an internal diameter (d_{I}) which in a load-free basic state is smaller than the external diameter (d_{A}) of the coil spring (F) and by way of a passing coil spring is able to be elastically expanded to a passage cross section, wherein the variable-diameter portion preferably forms the exit opening (375).

9. System according to Claim 8, **characterized in that** the supply nozzle (370) has an entry-side sleeve-shaped base portion (371) and an annular arrangement comprising multiple fingers (372), which are connected to the base portion by way of spring-elastic film hinge portions (373) in a radially pivotable manner, wherein free ends of the fingers enclose the exit opening (375), and/or **in that** the supply nozzle (370) is made of plastic, in particular by means of 3D printing, wherein anti-wear inserts (376) made of a wear-resistant material, in particular hardened steel, are preferably inserted on the free ends of the fingers.

10. System according to one of Claims 7 to 8, **characterized in that** the braking device (350) has a spring-specifically adapted spring guide sleeve (360) having a cylindrical guide duct (365) which has an internal diameter that matches the external diameter of the coil springs in such a way that the coil springs fit through the guide duct substantially without any clearance, wherein the spring guide sleeve, preferably on an entry side of the guide duct, has an introduction portion which conically widens towards the entry side and preferably transitions into a cylindrical attachment portion of which the internal diameter corresponds substantially to the external diameter of an upstream portion of the pipe (310), wherein the spring guide sleeve (360) is preferably arranged between a pipe main piece (311) and a supply nozzle (370).

11. System according to one of Claims 6 to 10, **characterized in that** the spring transfer system, in particular the braking device (350), has a magnetic braking unit (380) having at least one magnet (382) which is assigned to a spring receptacle (420) and is configured to decelerate by means of magnetic forces a coil spring introduced into the spring receptacle and to hold said coil spring in the spring receptacle.

12. System according to one of Claims 7 to 11, **characterized in that** the blocking device has at least one locking element which in response to control signals and with the aid of a drive is able to be transferred automatically from a retracted neutral position, or neutral configuration, into a blocking position, or blocking configuration, so as to block the return path.

13. System according to one of Claims 6 to 12, **characterized in that** the downstream machine (400) has multiple workstations and an internal transport unit (410) for transporting coil springs along a transport section to the workstations, wherein the transport unit (410) is rotatable about a rotation axis (412) by means of a rotary drive and has a multiplicity of spring receptacles (420) that are arranged in the form of a ring around the rotation axis (412) and are designed to receive a single coil spring each, wherein one of the workstations is a loading station (430) and the pipe leads to the loading station in such a way that an end portion of the pipe that contains the exit opening (375) is arranged so as to be coaxial with a spring receptacle positioned in the loading position, wherein the downstream machine (400) preferably has a heat treatment unit which comprises a heating station (440) disposed downstream of the loading station (430), and preferably a cooling station (450) disposed downstream of the heating station (440), said cooling station preferably comprising two, three, four or more successive cooling units.

14. System according to Claim 13, **characterized in that** at least one of the following workstations is additionally provided along the transport section:
a setting station (455) disposed downstream of the heat treatment unit;
a measuring station (460) disposed downstream of the heat treatment unit and/or the setting station;
an ejection station (470-1) for bad parts, which is disposed downstream of a measuring station (460);
an ejection station (470-2) which leads to a quality control unit and is disposed downstream of a measuring station (460);
an ejection station (470-3) for good parts, which is disposed downstream of a measuring station (460);
an empty checking station (480).

15. System according to one of Claims 6 to 14, **characterized by** an operating control system having a multiplicity of sensors (S1 - S8) for monitoring the production and for feedback control of production parameters on the basis of sensor signals, wherein the operating control system comprises one or more of the following functional groups:
two spring passage sensors (S1, S2.1, S2.2) which are arranged so as to be spaced apart from one another at different positions in the pipe (310), wherein sensor signals of the spring passage sensors are processed for detecting the time of flight and/or for determining the entry speed of the coil springs into a braking section (352), wherein a conveying output of the conveyor system is preferably subject to feedback control on the basis of the entry speed;
an exit sensor (379) for detecting a coil spring exiting the exit opening, wherein an internal transport unit (410) of the downstream machine (400) is preferably able to be controlled on the basis of sensor signals of the exit sensor in such a way that the internal transport unit is stopped while a coil spring is exiting;
a good parts sensor (S3) for detecting the number of ejected good parts;
a bad parts sensor (S6) for detecting the number of ejected bad parts;
a quality control sensor (S7) for detecting the number of coil springs ejected for quality control;
an empty checking sensor (S8).

## Revendications

1. Procédé permettant de fabriquer des ressorts hélicoïdaux en fil de fer, du fil de fer étant débité à partir d'une réserve de fil à une machine à enrouler des ressorts à commande numérique, des sections du fil dans la machine à enrouler des ressorts sont façonnées successivement en ressorts hélicoïdaux dans un processus de façonnage, chaque ressort hélicoïdal est sectionné du fil alimenté après le processus de façonnage, et des ressorts hélicoïdaux sectionnés sont ensuite transportés successivement à travers une conduite d'un système de débit pneumatique dans un logement de ressort d'une machine suivante,
**caractérisé par** :
un transfert de ressort anticollision qui comprend une transmission continue de ressorts hélicoïdaux de la conduite à travers une ouverture de sortie de la conduite dans des logements de ressort associés et un empêchement automatique d'un retour dans la conduite de ressorts hélicoïdaux passés à travers l'ouverture de sortie en direction du logement de ressort et reculant de la zone du logement de ressort, dans lequel, lors de la transmission continue, les ressorts hélicoïdaux ne sont arrêtés à aucun endroit sur le chemin à travers la conduite jusqu'à l'ouverture de sortie et ensuite jusqu'au logement de ressort jusqu'à l'immobilisation, et
le transfert de ressorts anticollision comprend un blocage automatique de la conduite contre le retour d'un ressort hélicoïdal reculant de la zone du logement de ressort après le passage à travers l'ouverture de sortie.

2. Procédé selon la revendication 1, **caractérisé en ce que** le transfert de ressort anticollision comprend en outre l'étape suivante consistant à :
(i) freiner les ressorts hélicoïdaux transportés successivement dans la zone d'un dispositif de freinage disposé à l'extrémité de la conduite sur une distance de freinage d'une vitesse d'entrée à l'entrée sur la distance de freinage jusqu'à une vitesse de sortie finie, réduite par rapport à la vitesse d'entrée, à la sortie de la distance de freinage de sorte que les ressorts hélicoïdaux sont sortis sans contact mutuel à la cadence de l'entrée, à la vitesse de sortie, à travers une ouverture de sortie en direction du logement de ressort ;

3. Procédé selon la revendication 1 ou 2, **caractérisé par** un changement temporaire du diamètre de l'ouverture de sortie entre un premier diamètre qui est inférieur au diamètre maximal du ressort hélicoïdal et un deuxième diamètre qui permet un passage du ressort hélicoïdal à travers l'ouverture de sortie, et/ou en ce que lors du freinage, les ressorts hélicoïdaux sont freinés en plusieurs, en particulier en deux, paliers de freinage successifs avec un effet de freinage différent, dans lequel de préférence un palier de freinage comprend un palier de frein à friction dans un canal de guidage à diamètre adapté et un palier de freinage consécutif comprend le passage forcé à travers une ouverture de sortie expansible élastiquement, ayant un diamètre secondaire, et/ou dans lequel, à un palier de freinage, un ressort hélicoïdal introduit dans un logement de ressort est freiné au moyen de forces magnétiques et est retenu dans le logement de ressort.

4. Procédé selon l'une quelconque des revendications 2 à 3, **caractérisé par** une régulation de la vitesse d'entrée sur une valeur à l'intérieur d'une plage de spécification par la détection d'une vitesse réelle des ressorts hélicoïdaux dans la zone d'une voie de mesure entre la machine à enrouler des ressorts et le dispositif de freinage ; une comparaison de la vitesse réelle avec une vitesse de consigne pour établir un écart de vitesse ; un changement d'une puissance de débit dans la conduite en fonction de l'écart de vitesse.

5. Procédé selon l'une quelconque des revendications précédentes, **caractérisé en ce que** la machine suivante présente plusieurs stations de travail et une unité de transport interne pourvue d'une pluralité de logements de ressort pour transporter des ressorts hélicoïdaux jusqu'aux stations de travail, une commande de l'unité de transport étant prévue en fonction de l'apport en ressorts hélicoïdaux.

6. Système (100) permettant de fabriquer des ressorts hélicoïdaux (F) en fil de fer (D), comprenant :
une machine à enrouler des ressorts (200) pourvue d'un dispositif d'entraînement (210) pour débiter du fil de fer (D) jusqu'à un dispositif de façonnage (220) qui présente des outils de façonnage pour façonner le fil en un ressort hélicoïdal, ainsi qu'un dispositif de découpe pour sectionner un ressort hélicoïdal (F) du fil alimenté à la fin du processus de façonnage ;
au moins une machine suivante (400) qui présente au moins un logement de ressort (420) pour recevoir un seul ressort hélicoïdal ;
un système de débit pneumatique (300) pourvu d'une conduite (310) pour transporter successivement des ressorts hélicoïdaux sectionnés de la machine à enrouler des ressorts (200) à la machine suivante (400), dans lequel un dispositif d'alimentation (320) pour un fluide sous pression est disposé derrière une ouverture d'entrée de la conduite pour accélérer les ressorts hélicoïdaux dans la direction de transport, et une ouverture de sortie (375, 395) pour sortir les ressorts hélicoïdaux dans des logements de ressort (420) associés est disposée sur un côté de sortie de la conduite,
**caractérisé par**
un système de transfert de ressort anticollision (305) qui est réalisé pour une transmission continue de ressorts hélicoïdaux de la conduite à travers une ouverture de sortie (375, 395) de la conduite (310) dans des logements de ressort (420) associés et un empêchement automatique d'un retour dans la conduite de ressorts hélicoïdaux passés à travers l'ouverture de sortie en direction du logement de ressort et reculant de la zone du logement de ressort, (310), dans lequel lors de la transmission continue, les ressorts hélicoïdaux ne sont arrêtés à aucun endroit sur le chemin à travers la conduite jusqu'à l'ouverture de sortie et ensuite jusqu'au logement de ressort jusqu'à l'immobilisation, et
le système de transfert de ressort (305) comprend un dispositif de blocage (370) pour bloquer automatiquement la conduite (310) contre le retour d'un ressort hélicoïdal reculant de la zone du logement de ressort (429) après le passage à travers l'ouverture de sortie (375).

7. Système selon la revendication 6, **caractérisé en ce que** le système de transfert de ressort (305) présente en outre un dispositif de freinage (350), qui définit une distance de freinage (352) à l'extrémité de la conduite (310) et est configuré pour freiner des ressorts hélicoïdaux arrivant successivement à l'intérieur de la distance de freinage d'une vitesse d'entrée à l'entrée dans la distance de freinage (352) jusqu'à une vitesse de sortie finie, réduite par rapport à la vitesse d'entrée, à la sortie du trajet de freinage (352) de telle sorte que les ressorts hélicoïdaux sont sortis sans contact mutuel à la cadence de l'entrée, à la vitesse de sortie, à travers une ouverture de sortie en direction du logement ressort.

8. Système selon la revendication 6 ou 7, **caractérisé en ce que** l'ouverture de sortie (375, 395) du système de transfert de ressort (305) est réalisée sous la forme d'une ouverture de sortie (375, 395) à diamètre variable permettant un changement temporaire du diamètre de l'ouverture de sortie entre un premier diamètre et un deuxième diamètre, dans lequel le premier diamètre est inférieur au diamètre maximal du ressort hélicoïdal, et le deuxième diamètre permet un passage du ressort hélicoïdal à travers l'ouverture de sortie, dans lequel de préférence le dispositif de freinage (350) présente une buse d'alimentation (370) à fermeture autonome qui présente un corps de buse pourvu d'une section à diamètre variable qui présente un diamètre intérieur (d_{I}) qui est inférieur au diamètre extérieur (d_{A}) du ressort hélicoïdal (F), et qui est expansible élastiquement par un ressort hélicoïdal traversant jusqu'à une section transversale de passage, dans lequel la section à diamètre variable constitue de préférence l'ouverture de sortie (375).

9. Système selon la revendication 8, **caractérisé en ce que** la buse d'alimentation (370) présente une section de base (371) en forme de douille côté entrée et un ensemble annulaire pourvu de plusieurs doigts(372) qui sont reliés à la section de base en pivotement radial par l'intermédiaire de sections de charnière intégrée (373) faisant ressort, dans lequel des extrémités libres des doigts entourent l'ouverture de sortie (375), et/ou **en ce que** la buse d'alimentation (370) est fabriquée en matière plastique, en particulier par impression 3D, dans lequel des inserts de protection contre l'usure (376) d'un matériau résistant à l'usure, en particulier d'acier trempé, sont insérés de préférence aux extrémités libres des doigts.

10. Système selon l'une quelconque des revendications 7 à 8, **caractérisé en ce que** le dispositif de freinage (350) présente une douille de guidage de ressort (360) adaptée en fonction du ressort, pourvue d'un canal de guidage cylindrique (365) qui présente un diamètre intérieur qui est adapté au diamètre extérieur des ressorts hélicoïdaux de telle sorte que les ressorts hélicoïdaux traversent le canal de guidage substantiellement sans jeu, dans lequel la douille de guidage de ressort présente de préférence sur un côté d'entrée du canal de guidage une section d'introduction s'élargissant de manière conique dont le diamètre intérieur correspond substantiellement au diamètre extérieur d'une section placée en amont de la conduite (310), dans lequel de préférence la douille de guidage de ressort (360) est disposée entre une pièce principale de conduite (311) et une buse d'alimentation (370).

11. Système selon l'une quelconque des revendications 6 à 10, **caractérisé en ce que** le système de transfert de ressort, en particulier le dispositif de freinage (350), présente une unité de freinage magnétique (380) pourvue d'au moins un aimant (382) qui est associé à un logement de ressort (420) et est configuré pour freiner un ressort hélicoïdal introduit dans le logement de ressort au moyen de forces magnétiques et pour le retenir dans le logement de ressort.

12. Système selon l'une quelconque des revendications 7 à 11, **caractérisé en ce que** le dispositif de blocage présente au moins un élément de verrouillage qui, en réaction à des signaux de commande, peut être transféré automatiquement à l'aide d'un dispositif d'entraînement d'une position neutre ou d'une configuration neutre escamotée vers une position de blocage ou une configuration de blocage pour bloquer le trajet de retour.

13. Système selon l'une quelconque des revendications 6 à 12, **caractérisé en ce que** la machine suivante (400) présente plusieurs stations de travail et une unité de transport interne (410) pour transporter des ressorts hélicoïdaux le long d'un trajet de transport jusqu'aux stations de travail, dans lequel l'unité de transport (410) peut tourner au moyen d'un dispositif d'entraînement en rotation autour d'un axe de rotation (412) et présente une pluralité de logements de ressort (420) qui sont disposés sous la forme d'un anneau autour de l'axe de rotation (412) et sont réalisés pour recevoir respectivement un seul ressort hélicoïdal, dans lequel l'une des stations de travail est une station de chargement (430) et la conduite mène à la station de chargement de telle sorte qu'une section d'extrémité de la conduite, contenant l'ouverture de sortie (375), est disposée coaxialement à un logement de ressort positionné dans la position de chargement, dans lequel de préférence la machine suivante (400) présente une unité de traitement thermique qui comprend une station de chauffage (440) placée en aval de la station de chargement (430) et de préférence une station de refroidissement (450) placée en aval de la station de chauffage (440) qui comprend de préférence deux, trois ou quatre unités de refroidissement consécutives.

14. Système selon la revendication 13, **caractérisé en ce qu'**en plus au moins l'une des stations de travail suivantes est prévue le long du trajet de transport :
une station de pose (455) placée en aval de l'unité de traitement thermique ;
une station de mesure (460) placée en aval de l'unité de traitement thermique et/ou de la station de pose ;
une station d'évacuation (470-1) pour des pièces rejetées, placée en aval d'une station de mesure (460),
une station d'évacuation (470-2) placée en aval d'une station de mesure (460) pour une unité de contrôle qualité ;
une station d'évacuation (470-3) pour des pièces acceptées, placée en aval d'une station de mesure (460) ;
une station de contrôle de vide (480).

15. Système selon l'une quelconque des revendications 6 à 14, **caractérisé par** un système de commande de fonctionnement avec une pluralité de capteurs (S1 à S8) pour surveiller la fabrication et pour réguler des paramètres de fabrication en fonction de signaux de capteur, le système de commande de fonctionnement comprenant un ou plusieurs des groupes fonctionnels suivants :
deux capteurs de traversée de ressort (S1, S2.1, S2.2) disposés de manière mutuellement espacée dans différentes positions de la conduite (310), dans lequel des signaux de capteur des capteurs de traversée de ressort sont traités pour détecter un temps de vol et/ou pour établir la vitesse d'entrée des ressorts hélicoïdaux dans une distance de freinage (352), dans lequel de préférence une puissance de débit du système de débit est régulée en fonction de la vitesse d'entrée ;
un capteur de sortie (379) pour détecter une sortie d'un ressort hélicoïdal de l'ouverture de sortie, dans lequel de préférence une unité de transport interne (410) de la machine suivante (400) peut être commandée en fonction des signaux de capteur du capteur de sortie de telle sorte que l'unité de transport interne est immobilisée à la sortie d'un ressort hélicoïdal ;
un capteur de pièces acceptées (S3) pour détecter le nombre de pièces acceptées évacuées ;
un capteur de pièces rejetées (S6) pour détecter le nombre de pièces rejetées évacuées ;
un capteur de contrôle qualité (S7) pour détecter le nombre des ressorts hélicoïdaux évacués pour le contrôle qualité ;
un capteur de contrôle de vide (S8).
